# EUROPEAN PATENT APPLICATION

(11) **EP 4 535 603 A1**
(43) Date of publication of application: **09.04.2025**
(21) Application number: 23856582.4
(22) Date of filing: 21.08.2023
(51) Int. Cl.: H02J 7/00, G06F 1/26, H01M 10/44

(54) **POWER SUPPLY METHOD, POWER SUPPLY SYSTEM, READABLE MEDIUM AND ELECTRONIC DEVICE**

(30) Priority: 22.08.2022 CN 202211007395
(71) Applicant: Huawei Technologies Co., Ltd., Shenzhen, Guangdong 518129 (CN)
(72) Inventor: LIU, Qinkai, Shenzhen, Guangdong 518129 (CN); MA, Junwen, Shenzhen, Guangdong 518129 (CN); CHEN, Yuchong, Shenzhen, Guangdong 518129 (CN)
(74) Representative: Epping - Hermann - Fischer
(86) International application number: PCT/CN2023/114104
(87) International publication number: WO 2024/041492

(57) **Abstract**

This application relates to the field of electronic technologies, and discloses a power supply method, a power supply system, a readable medium, and an electronic device. The electronic device includes a first component and a second component, and both the first component and the second component have a battery. If only the first component is connected to a power adapter, when a battery in the second component is charged by using the power adapter, a voltage that is input to an input end of a charging unit of the first component is clamped to be the same as an output voltage of a battery in the first component. In addition, a path through the input end of the charging unit of the first component, an output end of the charging unit of the first component, and an input end of a charging unit of the second component is established, and the battery in the second component is charged through the established path. In this way, a charging power of the battery in the second component no longer passes through the charging unit of the first component, thereby reducing an electric energy loss. In addition, when an output power of the power adapter is fixed, charging efficiency is improved.

## Description

This application claims priority to Chinese Patent Application No. 202211007395.9, filed with the China National Intellectual Property Administration on August 22, 2022 and entitled "POWER SUPPLY METHOD, POWER SUPPLY SYSTEM, READABLE MEDIUM, AND ELECTRONIC DEVICE", which is incorporated herein by reference in its entirety.

### TECHNICAL FIELD

This application relates to the field of electronic technologies, and in particular, to a power supply method, a power supply system, a readable medium, and an electronic device.

### BACKGROUND

To meet a requirement of a user for using an electronic device in different application scenarios, a growing number of electronic devices can be used as a tablet computer independently, and can also be used as a notebook computer in combination with another device, for example, a keyboard device. In such a type of electronic device, a battery is usually disposed in both the tablet computer and the keyboard device, and a charging unit and a power interface are disposed in each of the tablet computer and the keyboard device. Therefore, when charging the electronic device, the user needs to connect a power interface of the tablet computer to a power adapter to charge the tablet computer, and connect a power interface of the keyboard device to a power adapter to charge the keyboard device, leading to poor user experience.

### SUMMARY

In view of this, embodiments of this application provide a power supply method, a power supply system, a readable medium, and an electronic device, so that when only one of two electronic devices is connected to a power adapter, a battery in the electronic device and/or a battery in another electronic device can be charged.

According to a first aspect, an embodiment of this application provides a power supply method, applied to an electronic device. The electronic device includes a first component, a second component, and a switch module. The first component includes a first power supply system, and the second component includes a second power supply system. The first power supply system includes a first power interface, a first charging unit, and a first battery. The first power interface is electrically connected to a first input end of the first charging unit, and the first battery is electrically connected to a first battery end of the first charging unit. The second power supply system includes a second power interface, a second charging unit, and a second battery. The second power interface is electrically connected to a second input end of the second charging unit, and the second battery is electrically connected to a second battery end of the second charging unit. The method includes: when it is detected that the first power interface is connected to a power adapter and the second power interface is not connected to a power adapter, setting the first charging unit to a power supply mode, setting the second charging unit to a charging mode, establishing a first path through the first power interface and the second input end by using the switch module, and charging, by the second charging unit, the second battery through the first path by using the power adapter as a power supply.

According to the method provided in this embodiment of this application, when the second charging unit charges the second battery by using the power adapter as the power supply, because the first path does not pass through the first charging unit, a power at which the second charging unit charges the second battery has a power loss in only the second charging unit. This avoids a secondary power loss caused by a charging power passing through the first charging unit, helps save electric energy. In addition, when a power of the power adapter is fixed, charging efficiency is improved.

Optionally, in some implementations, the first path may be a path through the first power interface, a first output end of the first charging unit, and an input end of the second charging unit. Therefore, before establishing the first path, the electronic device may set a voltage that is input by the power adapter to the first power interface to be the same as a voltage that is input by the first battery to the first output end. In this way, if the first output end is further connected to another power-consuming module, a power consumed by the power-consuming module is not provided by the first charging unit, but is directly provided by the power adapter through the first path, thereby reducing a power loss and saving electric energy.

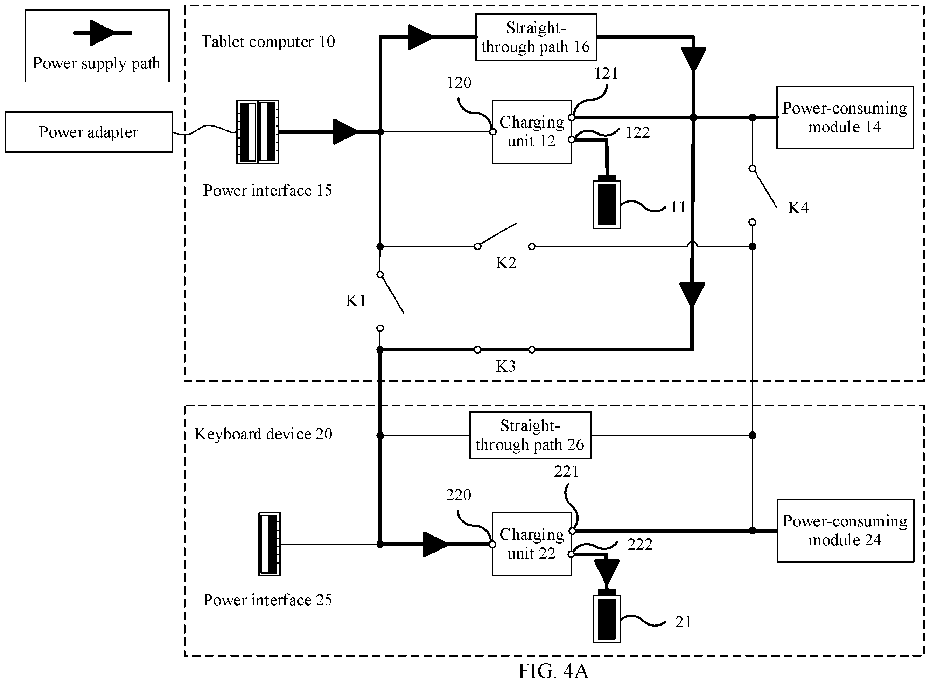

For example, in an implementation shown in FIG. 4A below, the switch module may include a switch K1 to a switch K4, a straight-through path 16, and a straight-through path 26. In this case, when a power interface 15 (the first power interface) is connected to a power adapter, a charging unit 12 (the first charging unit) may be set to the power supply mode, a charging unit 22 (the second charging unit) may be set to the charging mode, and a voltage that is input by the power adapter to an input end 120 (the first input end) is set to be the same as a voltage that is output by a battery 11 (the first battery) to an output end 121. The first path is established by connecting a switch, namely, the straight-through path 16 and turning on the switch K3, and turning off other switches and disconnecting other straight-through paths, so that the charging unit 22 charges a battery 21 (the second battery) through the power interface 15, the straight-through path 16, and the switch K3.

In a possible implementation of the first aspect, in a case in which a to-be-charged battery of the electronic device is the second battery, the second charging unit charges the second battery through the first path by using the power adapter as a power supply.

In a possible implementation of the first aspect, in a case in which a to-be-charged battery of the electronic device is the first battery and the second battery, a charging priority of the second battery is higher than that of the first battery, and a supply power of the power adapter is less than or equal to a charging power required by the second battery, the second charging unit charges the second battery through the first path by using the power adapter as a power supply.

In a possible implementation of the first aspect, the method further includes: in a case in which the to-be-charged battery is the first battery and the second battery, the charging priority of the second battery is higher than that of the first battery, and the supply power of the power adapter is greater than the charging power required by the second battery, setting the first charging unit and the second charging unit to the charging mode, establishing a second path through a first output end of the first charging unit and the second input end by using the switch module, charging, by the second charging unit, the second battery through the first charging unit and the second path at the power required by the second battery, and charging, by the first charging unit, the first battery at a remaining power of the power adapter.

Based on the method provided in this embodiment of this application, if a power provided by the power adapter is greater than the charging power required by the second battery, the electronic device may allocate a remaining power of the power adapter to the first battery, so that the power adapter can always charge the first battery and the second battery at a high power, instead of charging the first battery after the second battery is fully charged, thereby improving charging efficiency.

Optionally, in some implementations, when at least one of the first component and the second component is in a working state, the electronic device may charge, by using the second charging unit, the second battery through the first charging unit and the second path at the power required by the second battery, and charge, by using the first charging unit, the first battery at the remaining power of the power adapter.

For example, in some implementations, the electronic device may adjust powers output by the first output end, a second output end, the first battery end, and the second battery end by writing different current values to current-limiting registers in the first charging unit and the second charging unit, so that the second charging unit charges the second battery at the power required by the second battery, and the first charging unit charges the first battery at the remaining power of the power adapter.

In a possible implementation of the first aspect, the method further includes: in a case in which the to-be-charged battery is the first battery and the second battery, the charging priority of the first battery is higher than that of the second battery, and the supply power of the power adapter is greater than a charging power required by the first battery, setting the first charging unit and the second charging unit to the charging mode, establishing a third path through the first output end of the first charging unit and the second input end by using the switch module, and charging, by the first charging unit, the first battery at the power required by the second battery, and charging, by the second charging unit, the second battery through the first charging unit and the third path at a remaining power of the power adapter.

Based on the method provided in this embodiment of this application, if a power provided by the power adapter is greater than the charging power required by the first battery, the electronic device may allocate a remaining power of the power adapter to the second battery, so that the power adapter can always charge the first battery and the second battery at a high power, instead of charging the second battery after the first battery is fully charged, thereby improving charging efficiency.

Optionally, in some implementations, in a case in which the to-be-charged battery is the first battery and the second battery, the charging priority of the first battery is higher than that of the second battery, and the supply power of the power adapter is less than or equal to the charging power required by the first battery, the electronic device may first charge the first battery at a full power of the power adapter. When the power required by the first battery decreases to a value less than the supply power of the power adapter, the remaining power is then allocated to the second battery.

In a possible implementation of the first aspect, the method further includes: in a case in which the to-be-charged battery is the first battery and the second battery, setting the first charging unit and the second charging unit to the charging mode, establishing a fourth path through the first power interface and the second input end by using the switch module, charging, by the first charging unit, the first battery by using the power adapter as a power supply, and charging, by the second charging unit, the second battery through the fourth path by using the power adapter as a power supply. Based on the method provided in this embodiment of this application, both a power at which the first charging unit charges the first battery and a power at which the second charging unit charges the second battery have a loss in only one charging unit, thereby saving electric energy and improving charging efficiency.

Optionally, in some implementations, when power-consuming modules connected to the first output end and the second output end do not work, for example, when the electronic device is in a power-off state, the electronic device may use the first charging unit to charge the first battery by using the power adapter as the power supply, and use the second charging unit to charge the second battery through the fourth path by using the power adapter as the power supply.

In a possible implementation of the first aspect, the charging, by the first charging unit, the first battery by using the power adapter as a power supply, and charging, by the second charging unit, the second battery through the fourth path by using the power adapter as a power supply includes: in a case in which a charging priority of the first battery is higher than a priority of the second battery, and a charging power of the power adapter is greater than a power required by the first battery, charging, by the first charging unit, the first battery at the power required by the first battery, and charging, by the second charging unit, the second battery at a remaining power of the power adapter; or in a case in which a charging priority of the second battery is higher than a priority of the first battery, and a charging power of the power adapter is greater than a power required by the second battery, charging, by the second charging unit, the second battery at the power required by the second battery, and charging, by the first charging unit, the first battery at a remaining power of the power adapter.

Based on the method provided in this embodiment of this application, if a power provided by the power adapter is greater than a charging power required by a higher-priority battery, the electronic device may allocate a remaining power of the power adapter to a lower-priority battery, so that the power adapter can always charge the first battery and the second battery at a higher power, instead of charging the lower-priority battery after the higher-priority battery is fully charged, thereby improving charging efficiency.

Optionally, in some implementations, if a power provided by the power adapter is less than or equal to a charging power required by a higher-priority battery, the electronic device may first charge the higher-priority battery at a full power of the power adapter, and then allocate a remaining power to a lower-priority battery when the power required by the higher-priority battery decreases to a value less than the power provided by the power adapter.

In a possible implementation of the first aspect, the first component further includes a first power-consuming module, and the second component further includes a second power-consuming module. The first power-consuming module is electrically connected to a first output end of the first charging unit, and the second power-consuming module is electrically connected to a second output end of the second charging unit. The method further includes: when it is detected that neither the first power interface nor the second power interface is connected to a power adapter, if a remaining battery level of the first battery minus a remaining battery level of the second battery is greater than a first preset battery level, setting the first charging unit and the second charging unit to the power supply mode, establishing a fifth path through the first output end and the second input end by using the switch module, supplying power to the first power-consuming module by using the first battery, and supplying power to the second power-consuming module through the fifth path by using the first battery.

In this embodiment of this application, when the electronic device is not connected to a power adapter, if a difference between remaining battery levels of the first battery and the second battery is large, for example, the difference between the remaining battery levels of the first battery and the second battery is greater than the first preset power, a battery with a high remaining battery level may be used to supply power to the first power-consuming module and the second power-consuming module, thereby helping balance the remaining battery levels of the first battery and the second battery.

In a possible implementation of the first aspect, the method further includes: during supplying power to the first power-consuming module by using the first battery and supplying power to the second power-consuming module through the fifth path by using the first battery, in a case in which a supply power of the first battery is incapable of satisfying a power required by the first power-consuming module and/or the second power-consuming module, disconnecting the fifth path by using the switch module and establishing a sixth path through the first output end and the second output end, and supplying power to the first power-consuming module and the second power-consuming module by using the first battery and the second battery together.

In this embodiment of this application, if the power of the first battery cannot satisfy the power required by the first power-consuming module and/or the second power-consuming module, the first battery and the second battery may supply power to the first power-consuming module and the second power-consuming module together, to improve an available power of the first power-consuming module and/or the second power-consuming module, and ensure performance of the first power-consuming module and/or the second power-consuming module.

In a possible implementation of the first aspect, the first component is a tablet computer or a keyboard device, and the second component is a keyboard device or a tablet computer.

According to a second aspect, an embodiment of this application provides a power supply system, applied to an electronic device. The electronic device includes a first component and a second component. The power supply system includes a first power supply subsystem and a second power supply subsystem. The first power supply subsystem is disposed in the first component, and the second power supply subsystem is disposed in the second component. The first power supply subsystem includes a first power interface, a first charging unit, a first battery, a first switch, a second switch, a third switch, a fourth switch, and a fifth switch. The first power interface is electrically connected to a first input end of the first charging unit. The first battery is electrically connected to a first battery end of the first charging unit. One end of each of the first switch, the second switch, and the third switch is electrically connected to the first input end. The other end of the first switch is electrically connected to one end of the fourth switch. The other end of the second switch is electrically connected to one end of the fifth switch. The other end of the third switch is electrically connected to a first output end of the first charging unit. The other end of the fourth switch and the other end of the fifth switch are electrically connected to the first output end. The second power supply subsystem includes a second power interface, a second charging unit, a second battery, and a sixth switch. The second power interface is electrically connected to a second input end of the second charging unit. The second battery is electrically connected to a second battery end of the second charging unit. One end of the sixth switch is electrically connected to the second input end, and the other end of the sixth switch is electrically connected to a second output end of the second charging unit. The second input end is electrically connected to the one end of the fourth switch, and the second output end is electrically connected to the one end of the fifth switch. The power supply system is configured to: form a seventh path when a to-be-charged battery is the second battery, the first power interface is connected to a power adapter, and the second power interface is not connected to a power adapter. The seventh path is configured to charge the second battery, and the seventh path is a path that is formed in a case in which the first charging unit is in a power supply mode, the second charging unit is in a charging mode, the third switch and the fourth switch are turned on, and the first switch, the second switch, the fifth switch, and the sixth switch are turned off and that sequentially passes through the power adapter, the first power interface, the third switch, the fourth switch, the second charging unit, and the second battery.

According to the power supply system provided in this embodiment of this application, when the second charging unit charges the second battery by using the power adapter as a power supply, because the seventh path does not pass through the first charging unit, a power at which the second charging unit charges the second battery has a power loss in only the second charging unit. This avoids a secondary power loss caused by the charging power passing through the first charging unit, helps save electric energy. In addition, when a power of the power adapter is fixed, charging efficiency is improved.

Optionally, in some implementations, before the seventh path is formed, the power supply system may set a voltage that is input by the power adapter to the first power interface to be the same as a voltage that is input by the first battery to the first output end. In this way, if the first output end is further connected to another power-consuming module, a power consumed by the power-consuming module is not provided by the first charging unit, but is directly provided by the power adapter through the seventh path, thereby reducing a power loss and saving electric energy.

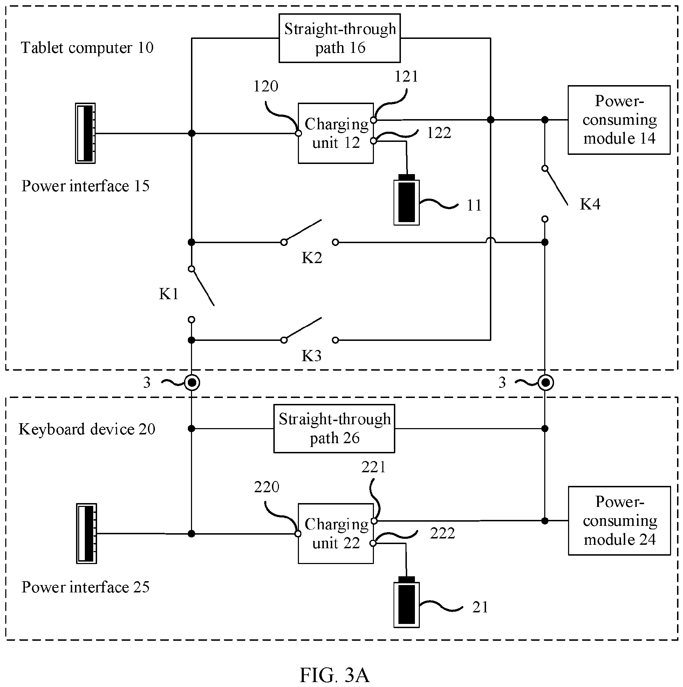

For example, in some implementations, for example, in an implementation shown in FIG. 3A below, the first charging unit may be a charging unit 12, the second charging unit may be a charging unit 22, the first switch may be a switch K1, the second switch may be a switch K2, the third switch may be a straight-through path 16, the fourth switch may be a switch K3, the fifth switch may be a switch K4, the sixth switch may be a straight-through path 26, the first battery may be a battery 11, and the second battery may be a battery 21.

In a possible implementation of the second aspect, the power supply system is further configured to: form an eighth path when the to-be-charged battery is the first battery and the second battery, the first power interface is connected to a power adapter, and the second power interface is not connected to a power adapter. The eighth path is configured to charge the second battery, and the eighth path is a path that is formed in a case in which the first charging unit and the second charging unit are in the charging mode, the fourth switch is turned on, and the first switch, the second switch, the third switch, the fifth switch, and the sixth switch are turned off and that sequentially passes through the power adapter, the first power interface, the first charging unit, the fourth switch, the second charging unit, and the second battery.

In this embodiment of this application, the power supply system may charge at least one of the first battery and the second battery by using the power adapter connected to the first power interface, and does not need to connect a power adapter to the second power interface to charge the second battery, thereby improving user experience.

Optionally, in some implementations, the power supply system may form the eighth path when at least one of the first component and the second component is in a working state.

In a possible implementation of the second aspect, the power supply system is further configured to: form a ninth path when the to-be-charged battery is the first battery and the second battery, the first power interface is connected to a power adapter, and the second power interface is not connected to a power adapter. The ninth path is configured to charge the second battery, and the ninth path is a path that is formed in a case in which the first charging unit and the second charging unit are in the charging mode, the first switch is turned on, and the second switch, the third switch, the fourth switch, the fifth switch, and the sixth switch are turned off and that sequentially passes through the power adapter, the first power interface, the first switch, the second charging unit, and the second battery.

Based on the power supply system provided in this embodiment of this application, both a power at which the first charging unit charges the first battery and a power at which the second charging unit charges the second battery have a loss in only one charging unit, thereby saving electric energy and improving charging efficiency.

Optionally, in some implementations, the power supply system may form the ninth path when neither the first component nor the second component works.

In a possible implementation of the second aspect, the first component and the second component are connected by using at least a first electrical connector and a second electrical connector. The second input end is electrically connected to the one end of the fourth switch by using the first electrical connector, and the second output end is electrically connected to the one end of the fifth switch by using the second electrical connector.

For example, in the implementation shown in FIG. 3A, the first connector may be an electrical connector 30 configured to connect a connection between the switch K1 and the switch K3 to an input end 220 of the charging unit 22, and the second electrical connector may be an electrical connector 3 configured to connect an electrical connection between the switch K4 and the switch K2 to an output end 221 of the charging unit 22.

According to a third aspect, an embodiment of this application provides a power supply system, applied to an electronic device. The electronic device includes a first component and a second component. The power supply system includes a first power supply subsystem and a second power supply subsystem. The first power supply subsystem is disposed in the first component, and the second power supply subsystem is disposed in the second component. The first power supply subsystem includes a first power interface, a first charging unit, a first battery, a seventh switch, an eighth switch, and a ninth switch. The first power interface is electrically connected to a first input end of the first charging unit. The first battery is electrically connected to a first battery end of the first charging unit. One end of each of the seventh switch and the ninth switch is electrically connected to the first input end. The other end of the seventh switch is electrically connected to one end of the eighth switch. The other end of the eighth switch and the other end of the ninth switch are electrically connected to a first output end of the first charging unit. The second power supply subsystem includes a second power interface, a second charging unit, a second battery, a tenth switch, an eleventh switch, and a twelfth switch. The second power interface is electrically connected to a second input end of the second charging unit. The second battery is electrically connected to a second battery end of the second charging unit. One end of each of the tenth switch and the twelfth switch is electrically connected to the second input end. The other end of the tenth switch is electrically connected to one end of the eleventh switch. The other end of the eleventh switch and the other end of the twelfth switch are electrically connected to a second output end of the second charging unit. The other end of the tenth switch is further electrically connected to one end that is of the seventh switch and that is electrically connected to the eighth switch. The power supply system is configured to: form a tenth path when a to-be-charged battery is the second battery, the first power interface is connected to a power adapter, and the second power interface is not connected to a power adapter. The tenth path is configured to charge the second battery, and the tenth path is a path that is formed in a case in which the first charging unit is in a power supply mode, the second charging unit is in a charging mode, the eighth switch, the ninth switch, and the tenth switch are turned on, and the seventh switch, the eleventh switch, and the twelfth switch are turned off and that sequentially passes through the power adapter, the first power interface, the eighth switch, the ninth switch, the tenth switch, the second charging unit, and the second battery. According to the power supply system provided in this embodiment of this application, when the second charging unit charges the second battery by using the power adapter as a power supply, because the tenth path does not pass through the first charging unit, a power at which the second charging unit charges the second battery has a power loss in only the second charging unit. This avoids a secondary power loss caused by the charging power passing through the first charging unit, helps save electric energy. In addition, when a power of the power adapter is fixed, charging efficiency is improved.

Optionally, in some implementations, before the tenth path is formed, the power supply system may set a voltage that is input by the power adapter to the first power interface to be the same as a voltage that is input by the first battery to the first output end. In this way, if the first output end is further connected to another power-consuming module, a power consumed by the power-consuming module is not provided by the first charging unit, but is directly provided by the power adapter through the tenth path, thereby reducing a power loss and saving electric energy.

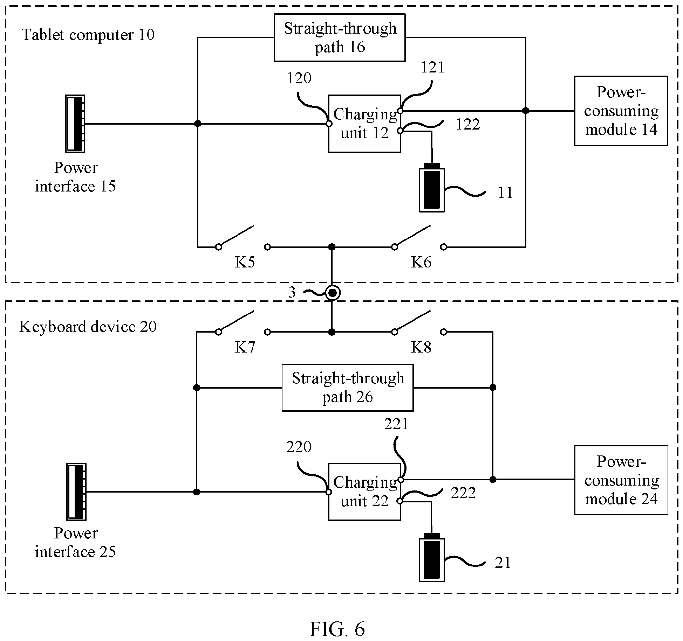

For example, in some implementations, for example, in an implementation shown in FIG. 6 below, the first charging unit may be a charging unit 12, the second charging unit may be a charging unit 22, the seventh switch may be a switch K5, the eighth switch may be a switch K6, the ninth switch may be a straight-through path 16, the tenth switch may be a switch K7, the eleventh switch may be a switch K8, the twelfth switch may be a straight-through path 26, the first battery may be a battery 11, and the second battery may be a battery 21.

In a possible implementation of the second aspect, the power supply system is further configured to: form an eleventh path when the to-be-charged battery is the first battery and the second battery, the first power interface is connected to a power adapter, and the second power interface is not connected to a power adapter. The eleventh path is configured to charge the second battery, and the eleventh path is a path that is formed in a case in which the first charging unit and the second charging unit are in the charging mode, the ninth switch and the tenth switch are turned on, and the seventh switch, the eighth switch, the eleventh switch, and the twelfth switch are turned off and that sequentially passes through the power adapter, the first power interface, the first charging unit, the ninth switch, the tenth switch, the second charging unit, and the second battery.

In this embodiment of this application, the power supply system may charge at least one of the first battery and the second battery by using the power adapter connected to the first power interface, and does not need to connect a power adapter to the second power interface to charge the second battery, thereby improving user experience.

Optionally, in some implementations, the power supply system may form the eleventh path when at least one of the first component and the second component is in a working state.

In a possible implementation of the second aspect, the power supply system is further configured to: form a twelfth path when the to-be-charged battery is the first battery and the second battery, the first power interface is connected to a power adapter, and the second power interface is not connected to a power adapter. The twelfth path is configured to charge the second battery, and the twelfth path is a path that is formed in a case in which the first charging unit and the second charging unit are in the charging mode, the seventh switch and the tenth switch are turned on, and the eighth switch, the ninth switch, the eleventh switch, and the twelfth switch are turned off and that sequentially passes through the power adapter, the first power interface, the seventh switch, the tenth switch, the second charging unit, and the second battery.

Based on the power supply system provided in this embodiment of this application, both a power at which the first charging unit charges the first battery and a power at which the second charging unit charges the second battery have a loss in only one charging unit, thereby saving electric energy and improving charging efficiency.

Optionally, in some implementations, the power supply system may form the twelfth path when neither the first component nor the second component works.

In a possible implementation of the second aspect, the first component and the second component are connected by using at least a third electrical connector, and the other end of the tenth switch is electrically connected, by using the third electrical connector, to the one end that is of the seventh switch and that is electrically connected to the eighth switch.

For example, in the implementation shown in FIG. 6, the third connector may be an electrical connector 3 configured to connect a connection between the switch K5 and the switch K6 to an electrical connection between the switch K7 and the switch K8.

According to a third aspect, an embodiment of this application provides an electronic device. The electronic device includes: a first component, where the first component includes a first battery; a second component, where the second component includes a second battery; a memory, where the memory stores instructions; and at least one processor, configured to execute the instructions, so that the electronic device charges the first battery and/or the second battery or supplies power to the first component and/or the second component according to the power supply method provided in any one of the first aspect and the possible implementations of the first aspect.

According to a fourth aspect, an embodiment of this application provides a computer-readable storage medium. The storage medium includes instructions. When the instructions are executed on an electronic device, the electronic device is enabled to implement the power supply method provided in any one of the first aspect and the possible implementations of the first aspect.

According to a fifth aspect, an embodiment of this application provides an electronic device. The electronic device includes the power supply system provided in any one of the second aspect and the possible implementations of the second aspect, and any one of the third aspect and the possible implementations of the third aspect.

According to a sixth aspect, an embodiment of this application provides a computer program product. When the program product runs on an electronic device, the electronic device is enabled to implement the power supply method provided in any one of the first aspect and the possible implementations of the first aspect.

### BRIEF DESCRIPTION OF DRAWINGS

FIG. 1A is a diagram of a structure of an electronic device 1 in a separated state according to some embodiments of this application;
FIG. 1B is a diagram of a structure of an electronic device 1 in a connected state according to some embodiments of this application;
FIG. 2A is a schematic of a power supply path for charging a battery 11 and a battery 21 by an electronic device 1 by using a power adapter connected to a tablet computer 10 according to some embodiments of this application;
FIG. 2B is a schematic of a power supply path for charging a battery 11 and a battery 21 by an electronic device 1 by using a power adapter connected to a keyboard device 20 according to some embodiments of this application;
FIG. 3A is a diagram of a structure of a power supply system of an electronic device 1 according to some embodiments of this application;
FIG. 3B is a diagram of a MOSFET-based switch SW1 according to some embodiments of this application;
FIG. 3C is a diagram of a MOSFET-based switch SW2 according to some embodiments of this application;
FIG. 4A is a schematic of a power supply path for charging a battery 21 by using a power adapter connected to a power interface 15 according to some embodiments of this application;
FIG. 4B is a schematic of a power supply path for charging both a battery 11 and a battery 21 by using a power adapter connected to a power interface 15 according to some embodiments of this application;
FIG. 4C is a schematic of another power supply path for charging both a battery 11 and a battery 21 by using a power adapter connected to a power interface 15 according to some embodiments of this application;
FIG. 5A is a schematic of a power supply path for charging a battery 21 by using a power adapter connected to a power interface 25 according to some embodiments of this application;
FIG. 5B is a schematic of a power supply path for charging both a battery 11 and a battery 21 by using a power adapter connected to a power interface 25 according to some embodiments of this application;
FIG. 5C is a schematic of another power supply path for charging both a battery 11 and a battery 21 by using a power adapter connected to a power interface 25 according to some embodiments of this application;
FIG. 6 is a diagram of another structure of a power supply system of an electronic device 1 according to some embodiments of this application;
FIG. 7A and FIG. 7B are a schematic flowchart of a power supply method according to some embodiments of this application;
FIG. 8 is a diagram of charging powers of a first-priority battery and a second-priority battery in a charging process according to some embodiments of this application;
FIG. 9 is a schematic flowchart of supplying power to a tablet computer 10 and a keyboard device 20 by using a battery 11 and/or a battery 21 according to some embodiments of this application;
FIG. 10A is a schematic of a power supply path for supplying power to a tablet computer 10 and a keyboard device 20 by using a battery 11 according to some embodiments of this application;
FIG. 10B is a schematic of a power supply path for supplying power to a tablet computer 10 and a keyboard device 20 by using a battery 11 and a battery 21 respectively according to some embodiments of this application;
FIG. 10C is a schematic of a power supply path for supplying power to a tablet computer 10 and a keyboard device 20 by using a battery 11 and a battery 21 together according to some embodiments of this application;
FIG. 10D is a schematic of a power supply path for supplying power to a tablet computer 10 and a keyboard device 20 by using a battery 21 according to some embodiments of this application;
FIG. 11 is a schematic flowchart of charging both a battery 11 and a battery 21 by an electronic device 1 based on a usage status of the electronic device 1 according to some embodiments of this application; and
FIG. 12 is a diagram of a hardware structure of a two-in-one computer 1 according to some embodiments of this application.

### DESCRIPTION OF EMBODIMENTS

The illustrative embodiments of this application include but are not limited to a power supply method, a power supply system, a readable medium, and an electronic device.

It may be understood that the power supply method provided in embodiments of this application is applicable to any electronic device that includes a plurality of batteries and a plurality of charging units. For ease of description, the following describes the technical solutions of this application with reference to the accompanying drawings by using an example in which an electronic device 1 in which a charging unit and a battery are separately disposed on both a tablet computer and a keyboard device.

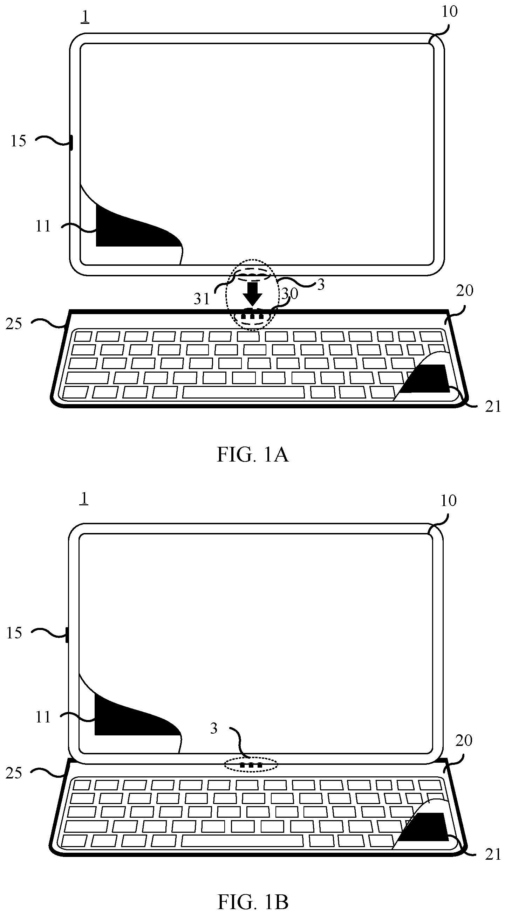

FIG. 1A is a diagram of a structure of an electronic device 1 in a separated state according to some embodiments of this application. FIG. 1B is a diagram of a structure of an electronic device 1 in a connected state according to some embodiments of this application.

As shown in FIG. 1A, the electronic device 1 includes a tablet computer 10 and a keyboard device 20. A battery 11 and a power interface 15 are disposed in the tablet computer 10, and a battery 21 and a power interface 25 are disposed in the keyboard device 20. An electrical connection portion 31 is disposed on the tablet computer 10, and is configured to electrically connect to an electrical connection portion 30 on the keyboard device 20. The electrical connection portion 31 and the electrical connection portion 30 may also be referred to as an electrical connector 3.

When the tablet computer 10 is not electrically connected to the keyboard device 20, the tablet computer is supplied with power by the battery 11 in the tablet computer 10, or the tablet computer is supplied with power by using a power adapter connected to the power interface 15; and the keyboard device 20 is supplied with power by the battery 21 disposed in the keyboard device 20, or the keyboard device 20 is supplied with power by using a power adapter connected to the power interface 25.

Refer to FIG. 1B. After the tablet computer 10 and the keyboard device 20 establish an electrical connection through the electrical connection portion 30 and the electrical connection portion 31, the electronic device 1 may be used as a notebook computer. In this case, at least one of the battery 11, the power adapter connected to the power interface 15, the battery 21, and the power adapter connected to the power interface 25 may supply power to the electronic device 1.

It may be understood that the electrical connector 3 may be any electrical connector, including but not limited to a spring-loaded pin, a threaded connector, a clamping connector, a latch connector, a push-pull connector, an in-line connector, a connection line, and the like.

However, when the battery 11 and the battery 21 are charged, regardless of whether the tablet computer 10 and the keyboard device 20 are electrically connected, the tablet computer 10 can be charged only by connecting a power adapter to the power interface 15, and the keyboard device 20 can be charged only by connecting a power adapter to the power interface 25, leading to poor user experience.

Therefore, in some embodiments, when only one of the tablet computer 10 and the keyboard device 20 is connected to a power adapter, an output of a charging unit of a device connected to the power adapter may be electrically connected to an input of a charging unit of a device not connected to the power adapter, thereby charging two devices by using one power adapter.

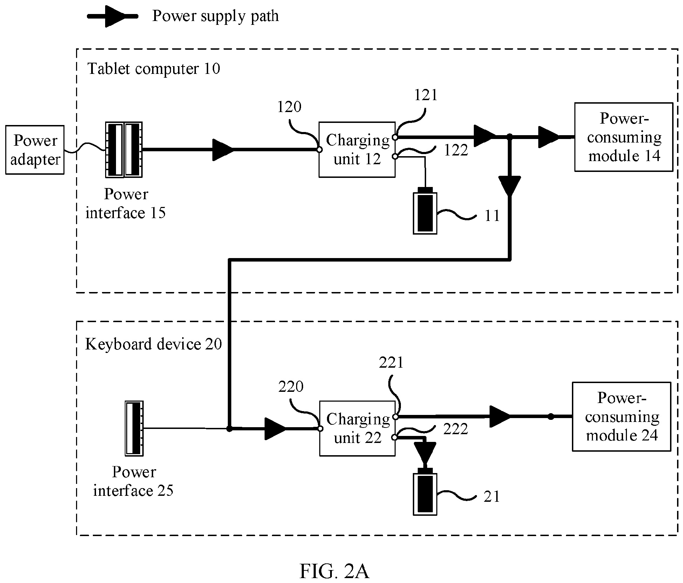

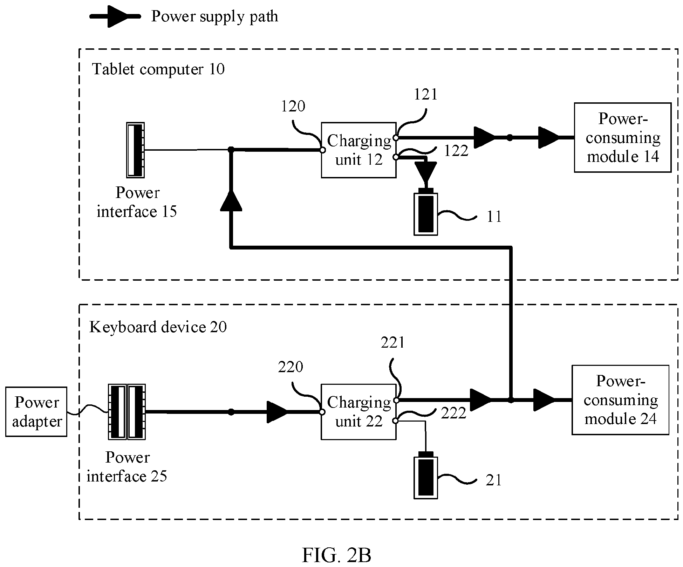

Specifically, FIG. 2A is a schematic of a power supply path for charging a battery 11 and a battery 21 by using a power adapter connected to a tablet computer 10 according to some embodiments of this application. FIG. 2B is a schematic of a power supply path for charging a battery 11 and a battery 21 by using a power adapter connected to a keyboard device 20 according to some embodiments of this application.

Refer to FIG. 2A. An electronic device 1 includes a power interface 15, a charging unit 12, the battery 11, and a power-consuming module 14 that are disposed in the tablet computer 10, and a power interface 25, a charging unit 22, the battery 21, and a power-consuming module 24 that are disposed in the keyboard device 20.

One end of the power interface 15 is configured to be connected to the power adapter, and the other end is electrically connected to an input end 120 of the charging unit 12.

An output end 121 of the charging unit 12 is electrically connected to the power-consuming module 14, and a battery end 122 is connected to the battery 11. The charging unit 12 includes two working modes: a charging mode and a power supply mode. In the charging mode, the charging unit 12 charges the battery 11 by using the power adapter connected to the input end 120 as a power supply, and supplies power to the outside by using the output end 121. In the power supply mode, when the input end 120 has no power adapter, the charging unit 12 uses the battery 11 connected to the battery end 122 as a power supply, and supplies power to the outside by using the output end 121; or when the input end 120 has a power adapter, the charging unit 12 uses the battery 11 connected to the battery end 122 and/or the power adapter connected to the input end 120 as a power supply, and supplies power to the outside by using the output end 121.

It may be understood that, in some embodiments, the charging unit 12 may include a charging chip and an accessory circuit related to the charging chip.

One end of the power interface 25 is configured to be connected to the power adapter, and the other end is electrically connected to an input end 220 of the charging unit 22.

An output end 221 of the charging unit 22 is electrically connected to the power-consuming module 24, and a battery end 222 is connected to the battery 21. The charging unit 22 includes two working modes: a charging mode and a power supply mode. In the charging mode, the charging unit 22 charges the battery 21 by using the power adapter connected to the input end 220 as a power supply, and supplies power to the outside by using the output end 221. In the power supply mode, when the input end 220 has no power adapter, the charging unit 22 uses the battery 21 connected to the battery end 222 as a power supply, and supplies power to the outside by using the output end 221; or when the input end 220 has a power adapter, the charging unit 22 uses the battery 21 connected to the battery end 222 and/or the power adapter connected to the input end 220 as a power supply, and supplies power to the outside by using the output end 221.

When the power interface 15 is connected to a power adapter, if only the battery 21 needs to be charged, the electronic device 1 may set the charging unit 12 to the power supply mode, set the charging unit 22 to the charging mode, and establish an electrical connection between the output end 121 of the charging unit 12 and the input end 220 of the charging unit 22, so that the charging unit 22 may charge the battery 21 at a power output by the output end 121 of the charging unit 12. Similarly, refer to FIG. 2B. When the power interface 15 is connected to a power adapter, if only the battery 11 needs to be charged, the electronic device 1 may set the charging unit 22 to the power supply mode, and set the charging unit 12 to the charging mode. The electronic device 1 may establish an electrical connection between the output end 221 of the charging unit 22 and the input end 120 of the charging unit 12, so that the charging unit 12 may charge the battery 11 at a power output by the output end 221 of the charging unit 22.

However, as shown in FIG. 2A and FIG. 2B, an input of a charging unit in a device (referred to as a secondary device below) that is not connected to a power adapter comes from an output of a charging unit in a device (referred to as a primary device below) that is connected to a power adapter. Therefore, a charging power of a battery in the secondary device needs to pass through two charging units, causing two power losses and a waste of electric energy, and affecting charging efficiency. For example, in a case shown in FIG. 2A, it is assumed that the power-consuming module 14 and the power-consuming module 24 do not work (that is, do not consume a power), a charging power of the battery 21 is W₁, and power losses of the charging unit 12 and the charging unit 22 are 0.05. In this case, a power loss of the charging unit 22 is W₁/(1 - 0.05) × 0.05 = 0.053 W₁, a power loss of the charging unit 12 is W₁/(1 - 0.05)/(1 - 0.05) × 0.05 = 0.055 W₁, and a power loss of charging the battery 21 at the power W₁ is 0.108 W₁. Similarly, for a case shown in FIG. 2B, it is assumed that the power-consuming module 14 and the power-consuming module 24 do not work, a charging power of the battery 11 is W₂, and power losses of the charging unit 12 and the charging unit 22 are 0.05. In this case, a power loss of charging the battery 11 at the power W₂ is 0.108 W₂.

To avoid two power losses caused by a charging power of the secondary device passing through two charging units, an embodiment of this application provides a power supply method. When the battery in the secondary device is charged by using a power adapter connected to the primary device, a voltage that is input to an input end of a charging unit of the primary device is clamped to be the same as an output voltage of a battery in the primary device, the input end and an output end of the charging unit of the primary device are short-circuited, and the output end of the charging unit of the primary device and an input end of a charging unit of the secondary device are short-circuited. In this way, a power of the charging unit of the secondary device for charging the battery in the secondary device no longer passes through the charging unit of the primary device, thereby reducing an electric energy loss. In addition, when an output power of the power adapter is fixed, a charging power can be increased because of reduction in the electric energy loss, thereby improving charging efficiency.

Specifically, FIG. 3A is a diagram of a structure of a power supply system of an electronic device 1 according to some embodiments of this application.

As shown in FIG. 3A, a power supply system of the electronic device 1 includes a power interface 15, a charging unit 12, a battery 11, a power-consuming module 14, a switch K1 to a switch K4, and a straight-through path 16 that are disposed in a tablet computer 10, and a power interface 25, a charging unit 22, a battery 21, a power-consuming module 24, and a straight-through path 26 that are disposed in a keyboard device 20.

One end of the power interface 15 is configured to be connected to the power adapter, and the other end is electrically connected to an input end 120 of the charging unit 12.

An output end 121 of the charging unit 12 is electrically connected to the power-consuming module 14, and a battery end 122 is connected to the battery 11. The charging unit 12 includes two working modes: a charging mode, in which the battery 11 is charged by using the input end 120 as a power supply, and the output end 121 supplies power to the outside; and a power supply mode, in which the battery end 122 is used as a power supply, and the output end 121 supplies power to the outside.

It may be understood that in some embodiments, the charging unit 12 may clamp, according to a charging protocol, for example, a third-generation fast charging protocol (Power Delivery 3.0, PD 3.0), a voltage that is input by the power adapter to the input end 120 of the charging unit 12 to be the same as that of the battery 11. For example, the charging unit 12 may adjust an output voltage of the power adapter to be the same as that of the battery 11, to clamp the voltage that is input by the power adapter to the input end 120 of the charging unit 12 to be the same as that of the battery 11.

It may be understood that, in some embodiments, the charging unit 12 may include a charging chip and an accessory circuit related to the charging chip. In some other embodiments, the charging unit 12 may include a current-limiting register (not shown) configured to manage a power output by the output end 121 of the charging unit 12 and a power at which the battery end 122 charges the battery 11. The electronic device 1 may limit, by writing different values to the current-limiting register, the power output by the output end 121 and the power at which the battery end 122 charges the battery 11.

One end of the straight-through path 16 is connected to the input end 120 of the charging unit 12, and the other end is connected to the output end 121 of the charging unit 12. The straight-through path 16 may connect or disconnect an electrical connection between two ends of the straight-through path based on a control signal, so that the straight-through path 16 may be configured to connect or disconnect an electrical connection between the input end 120 and the output end 121 of the charging unit 12.

It may be understood that, in some embodiments, the straight-through path 16 may also be integrated into the charging unit 12. In other words, a switch that can disconnect or connect the input end 120 and the output end 121 of the charging unit 12 is disposed in the charging unit 12. This is not limited herein.

The power-consuming module 14 includes various power-consuming components in the tablet computer 10, such as a processor, a memory, a controller, and an input/output device.

One end of each of the switch K1 and a switch K2 is electrically connected to the input end 120 of the charging unit 12, one end of each of a switch K3 and the switch K4 is electrically connected to the output end 121 of the charging unit 12, the other end of the switch K1 is electrically connected to the other end of the switch K3, and the other end of the switch K2 is electrically connected to the other end of the switch K4.

One end that is of the switch K1 and that is connected to the switch K3 is electrically connected to the input end 220 of the charging unit 22, and one end that is of the switch K4 and that is electrically connected to the switch K2 is electrically connected to the output end 221 of the charging unit 22. For example, in some embodiments, the one end that is of the switch K1 and that is connected to the switch K3 may be electrically connected to the input end 220 of the charging unit 22 by using the electrical connector 3, and the one end that is of the switch K4 and that is electrically connected to the switch K2 may be electrically connected to the output end 221 of the charging unit 22 by using the electrical connector 3.

It may be understood that, in some embodiments, the switch K1, the switch K2, the switch K3, and the switch K4 may be turned on or turned off based on a control signal, for example, a control signal sent by the processor in the power-consuming module 14, to electrically connect or disconnect two ends of each switch.

It may be understood that, in some other embodiments, at least some of the switch K1, the switch K2, the switch K3, and the switch K4 may be further disposed in the keyboard device 20. This is not limited herein.

One end of the power interface 25 is configured to be connected to the power adapter, and the other end is electrically connected to an input end 220 of the charging unit 22.

An output end 221 of the charging unit 22 is electrically connected to the power-consuming module 24, and a battery end 222 is connected to the battery 21. The charging unit 22 includes two working modes: a charging mode, in which the battery 21 is charged by using the input end 220 as a power supply, and the output end 221 supplies power to the outside; and a power supply mode, in which the battery end 222 is used as a power supply, and the output end 221 supplies power to the outside.

It may be understood that in some embodiments, the charging unit 22 may clamp, according to a charging protocol, for example, a PD 3.0, a voltage that is input by the power adapter to the input end 220 of the charging unit 22 to be the same as that of the battery 21. For example, the charging unit 22 may adjust an output voltage of the power adapter to be the same as that of the battery 21, to clamp the voltage that is input by the power adapter to the input end 220 of the charging unit 22 to be the same as that of the battery 21.

It may be understood that, in some embodiments, the charging unit 22 may include a charging chip and an accessory circuit related to the charging chip. In some other embodiments, the charging unit 22 may include a current-limiting register (not shown) configured to manage a power output by the output end 221 of the charging unit 22 and a power at which the battery end 222 charges the battery 21. The electronic device 1 may limit, by writing different values to the current-limiting register, the power output by the output end 221 and the power at which the battery end 222 charges the battery 21.

One end of the straight-through path 26 is electrically connected to the input end 220 of the charging unit 22, and the other end is connected to the output end 221 of the charging unit 22. The straight-through path 26 may connect or disconnect an electrical connection between two ends of the straight-through path based on a control signal, so that the straight-through path 26 may be configured to connect or disconnect an electrical connection between the input end 220 and the output end 221 of the charging unit 22.

It may be understood that, in some embodiments, the straight-through path 26 may also be integrated into the charging unit 22. In other words, a switch that can disconnect or connect the input end 220 and the output end 221 of the charging unit 22 is disposed in the charging unit 22. This is not limited herein.

It may be understood that, in some embodiments, the switch K1 to the switch K4, the straight-through path 16, and the straight-through path 26 may be switch chips having a bidirectional isolation function, or may be built by using a metal-oxide-semiconductor field-effect transistor (Metal-Oxide-Semiconductor Field-Effect Transistor, MOSFET), or may be another component that can implement a switch function. This is not limited herein.

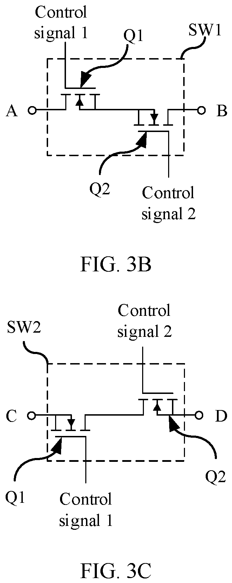

For example, FIG. 3B is a diagram of a MOSFET-based switch SW1 according to some embodiments of this application. FIG. 3C is a diagram of a MOSFET-based switch SW2 according to some embodiments of this application.

Refer to FIG. 3B. A switch SW1 includes an N-channel MOSFET Q1 and an N-channel MOSFET Q2. A source of the MOSFET Q1 is electrically connected to a source of the N-channel MOSFET Q2. A drain of the MOSFET Q1 is used as an end A of the switch SW1, and a drain of the MOSFET Q2 is used as an end B of the switch SW1. Gates of the MOSFET Q1 and the MOSFET Q2 are respectively configured to receive a control signal 1 and a control signal 2. When the control signal 1 reaches a turn-on voltage of the MOSFET Q1 and the control signal 2 reaches a turn-on voltage of the MOSFET Q2, the switch SW1 is turned on, and a current is allowed to flow from the end B to the end A or from the end A to the end B. When the control signal 1 does not reach the turn-on voltage of the MOSFET Q1 and/or the control signal 2 does not reach the turn-on voltage of the MOSFET Q2, the switch SW1 is turned off.

Refer to FIG. 3C. A switch SW2 includes an N-channel MOSFET Q1 and an N-channel MOSFET Q2. A drain of the MOSFET Q1 is electrically connected to a drain of the N-channel MOSFET Q2. A source of the MOSFET Q1 is used as an end C of the switch SW2, and a source of the MOSFET Q2 is used as an end D of the switch SW2. Sources of the MOSFET Q1 and the MOSFET Q2 are respectively configured to receive a control signal 1 and a control signal 2. When the control signal 1 reaches a turn-on voltage of the MOSFET Q1 and the control signal 2 reaches a turn-on voltage of the MOSFET Q2, the switch SW2 is turned on, and a current is allowed to flow from the end C to the end D or from the end D to the end C. When the control signal 1 does not reach the turn-on voltage of the MOSFET Q1 and/or the control signal 2 does not reach the turn-on voltage of the MOSFET Q2, the switch SW2 is turned off.

It may be understood that the switch SW1 and the switch SW2 are merely used as an example rather than a limitation of the switch K1 to the switch K4, the straight-through path 16, and the straight-through path 26. In some other embodiments, the switch SW1/the switch SW2 may include another electronic component, for example, a resistor or a capacitor; or the MOSFET Q1 and the MOSFET Q2 may be replaced with a P-channel MOSFET. This is not limited herein.

With reference to the structure of the electronic device 1 shown in FIG. 3A, the following describes a technical solution in which the electronic device 1 supplies power to the battery 11 and the battery 21.

First, a case in which only the power interface 15 is connected to the power adapter is described.

FIG. 4A is a schematic of a power supply path for charging a battery 21 by using a power adapter connected to a power interface 15 according to some embodiments of this application.

As shown in FIG. 4A, when only the power interface 15 is connected to a power adapter, if the electronic device 1 needs to charge only the battery 21, the electronic device 1 may set the charging unit 12 to a power supply mode, set the charging unit 22 to a charging mode, adjust a voltage that is input by the power adapter to the charging unit 12 to be the same as an output voltage of the battery 11, turn on the switch K3, connect the straight-through path 16, disconnect the straight-through path 26, and turn off the switch K1, the switch K2, and the switch K4. In this way, the power adapter may charge the battery 21 sequentially through the power interface 15, the straight-through path 16, the switch K3, and the charging unit 22. It is assumed that a power at which the charging unit 22 charges the battery 21 is W₁, and a power loss of the charging unit 22 is 0.05. In this case, a power loss of charging the battery 21 at the power W₁ is W₁/(1 - 0.05) × 0.05 = 0.053 W₁. Because the power W₁ does not need to pass through the charging unit 12, in comparison with the embodiment shown in FIG. 2A, the power loss is reduced by (0.108 W₁ - 0.053 W₁)/0.108 W₁ = 50.92%, thereby avoiding a waste of electric energy. In addition, when a power of the power adapter is fixed, charging efficiency may be improved.

It may be understood that, in a case shown in FIG. 4A, if the power-consuming module 14 is in a working state, the power adapter may also provide a power for the power-consuming module 14 through the straight-through path 14. When the power adapter cannot provide a sufficient power for the power-consuming module 14, the battery 11 and the power adapter may jointly provide a power for the power-consuming module 14.

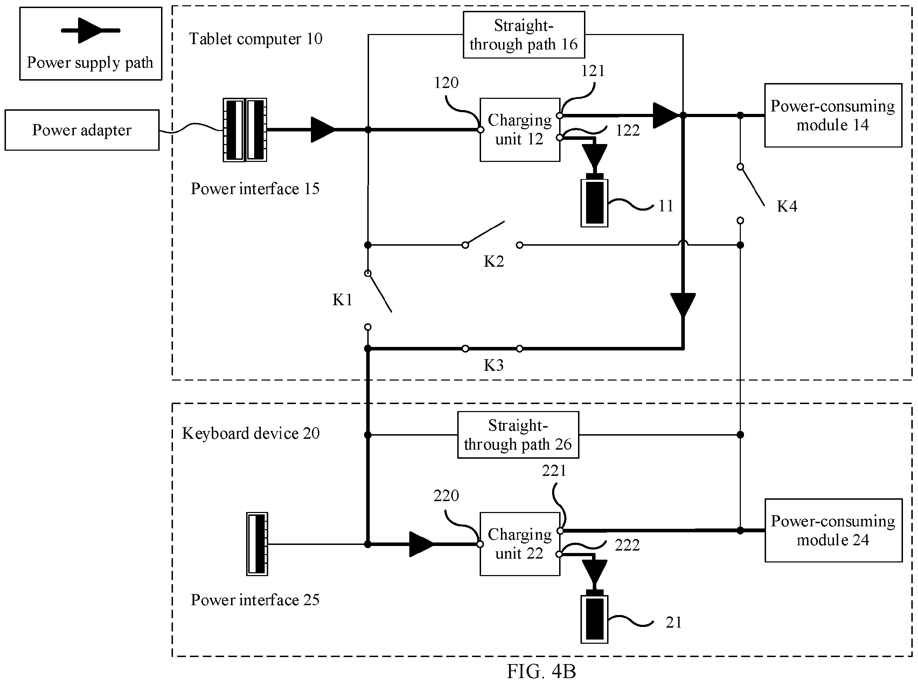

FIG. 4B is a schematic of a power supply path for charging both a battery 11 and a battery 21 by using a power adapter connected to a power interface 15 according to some embodiments of this application.

As shown in FIG. 4B, when only the power interface 15 is connected to a power adapter, if the electronic device 1 needs to charge both the battery 11 and the battery 21, the electronic device 1 may set the charging unit 12 and the charging unit 22 to a charging mode, turn on the switch K3, disconnect the straight-through path 16 and the straight-through path 26, and turn off the switch K1, the switch K2, and the switch K4. In this way, the power adapter may charge the battery 11 by using the charging unit 12, and charge the battery 21 sequentially through the charging unit 12, the switch K3, and the charging unit 22.

It may be understood that, in a case shown in FIG. 4B, because the power of the power adapter is directly provided to the charging unit 12, both the power-consuming module 14 and the keyboard device 20 serve as loads of the charging unit 12, and may obtain a power from the output end 121 according to power requirements of the power-consuming module 14 and the keyboard device 20. Therefore, in some embodiments, when the power-consuming module 14 and/or the power-consuming module 24 are in a working state, the electronic device 10 may charge the battery 11 and the battery 21 by using the solution in FIG. 4B.

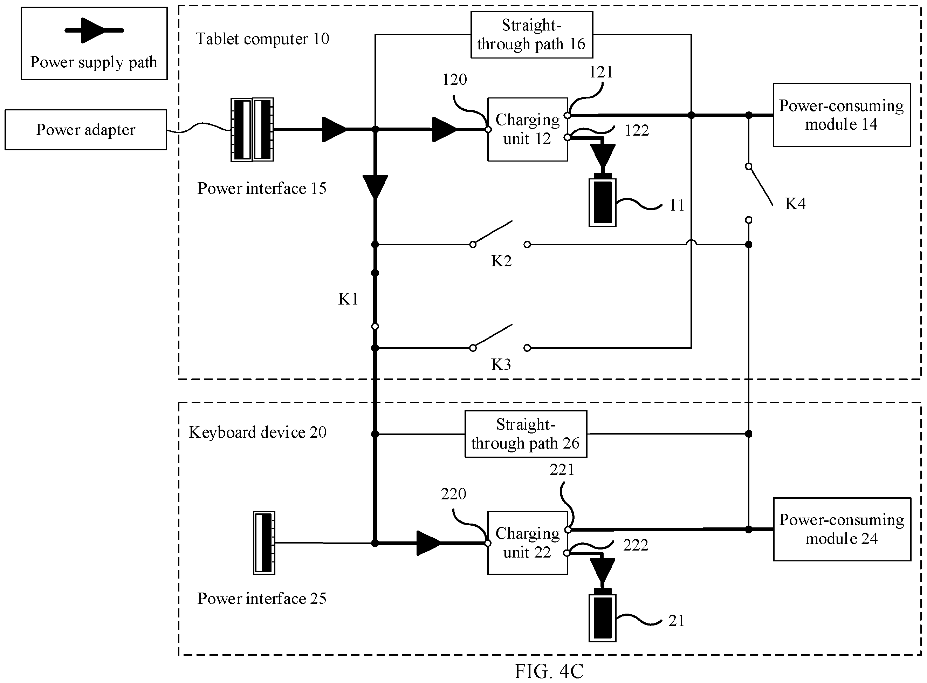

An embodiment of this application further provides another power supply path for charging both the battery 11 and the battery 21. Specifically, FIG. 4C is a schematic of another power supply path for charging both a battery 11 and a battery 21 by using a power adapter connected to a power interface 15.

As shown in FIG. 4C, when only the power interface 15 is connected to a power adapter, if the electronic device 1 needs to charge both the battery 11 and the battery 21, the electronic device 1 may set the charging unit 12 and the charging unit 22 to a charging mode, turn on the switch K1, disconnect the straight-through path 16 and the straight-through path 26, and turn off the switch K2 to the switch K4. In this way, the power adapter may charge the battery 11 by using the charging unit 12, and charge the battery 21 sequentially through the switch K1 and the charging unit 22. In this way, a power at which the charging unit 22 charges the battery 21 no longer passes through the charging unit 12, thereby reducing a quantity of power losses and avoiding a waste of electric energy. In addition, when a power of the power adapter is fixed, charging efficiency may be improved.

It may be understood that, in some embodiments, if the power-consuming module 14 and/or the power-consuming module 24 are/is in a working state, when the battery 11 and the battery 21 are charged through the power supply path shown in FIG. 4C, because a consuming power of the power-consuming module 14 and/or the power-consuming module 24 dynamically change/changes, charging powers output by the power adapter to the charging unit 12 and the charging unit 22 need to be dynamically allocated. Therefore, when the power adapter does not have a capability of dynamically allocating a charging power, the power supply path shown in FIG. 4C may be used to charge the battery 11 and the battery 21 only when neither the power-consuming module 14 nor the power-consuming module 24 is in a working state, that is, when the electronic device 1 is in a power-off state.

A case in which only the power interface 25 is connected to the power adapter is described below.

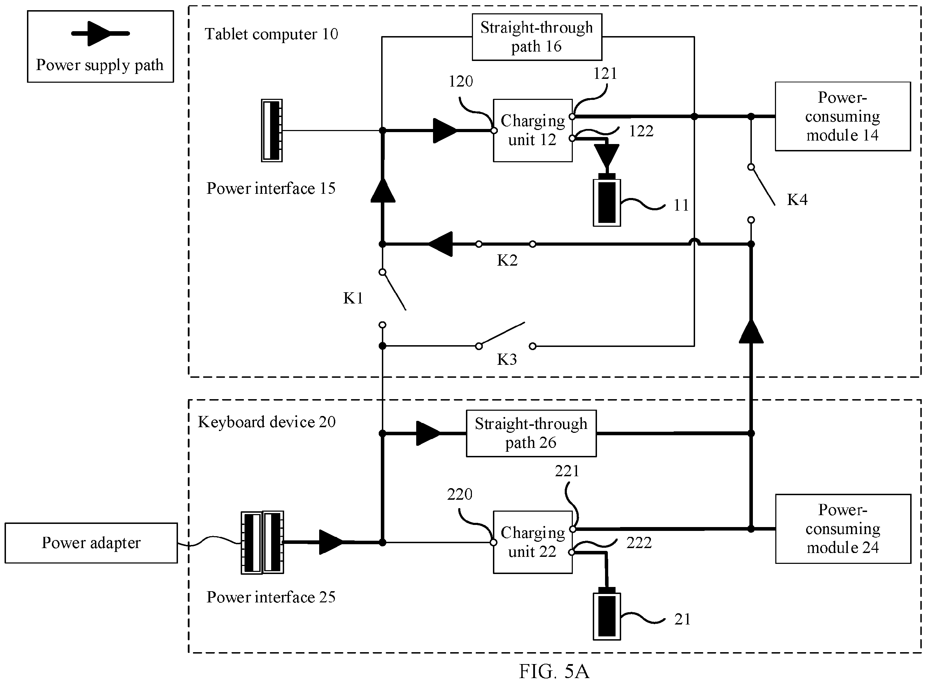

FIG. 5A is a schematic of a power supply path for charging a battery 11 by using a power adapter connected to a power interface 25 according to some embodiments of this application.

As shown in FIG. 5A, when only the power interface 25 is connected to a power adapter, if the electronic device 1 needs to charge only the battery 11, the electronic device 1 may set the charging unit 22 to a power supply mode, set the charging unit 12 to a charging mode, adjust a voltage that is input by the power adapter to the charging unit 22 to be the same as an output voltage of the battery 21, turn on the switch K2, connect the straight-through path 26, disconnect the straight-through path 16, and turn off the switch K1, the switch K3, and the switch K4. In this way, the power adapter may charge the battery 11 sequentially through the power interface 25, the straight-through path 26, the switch K2, and the charging unit 12. It is assumed that a power at which the charging unit 12 charges the battery 11 is W₂, and a power loss of the charging unit 12 is 0.05. In this case, a power loss of charging the battery 11 at the power W₂ is W₂/(0.05) × 0.05 = 0.053 W₂. Because the power W₂ does not need to pass through the charging unit 12, in comparison with the embodiment shown in FIG. 2A, the power loss is reduced by (0.108 W₂ - 0.053 W₂)/0.108 W₂ = 50.92%, thereby avoiding a waste of electric energy. In addition, when a power of the power adapter is fixed, charging efficiency may be improved.

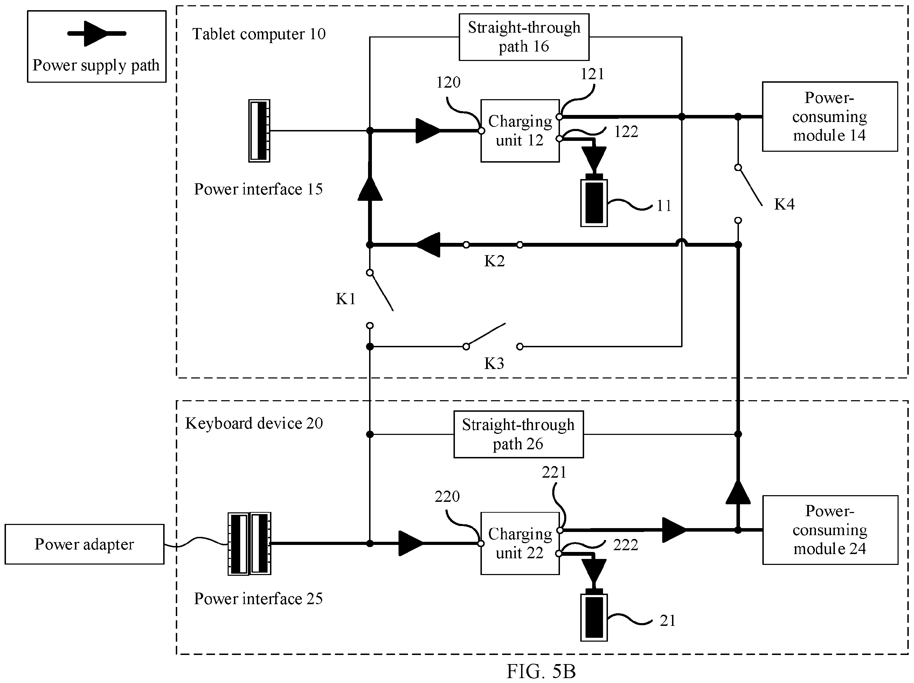

FIG. 5B is a schematic of a power supply path for charging both a battery 11 and a battery 21 by using a power adapter connected to a power interface 25 according to some embodiments of this application.

As shown in FIG. 5B, when only the power interface 25 is connected to a power adapter, if the electronic device 1 needs to charge both the battery 11 and the battery 21, the electronic device 1 may set the charging unit 12 and the charging unit 22 to a charging mode, turn on the switch K2, disconnect the straight-through path 16 and the straight-through path 26, and turn off the switch K1, the switch K3, and the switch K4. In this way, the power adapter may charge the battery 21 by using the charging unit 22, and charge the battery 11 sequentially through the charging unit 22, the switch K2, and the charging unit 12.

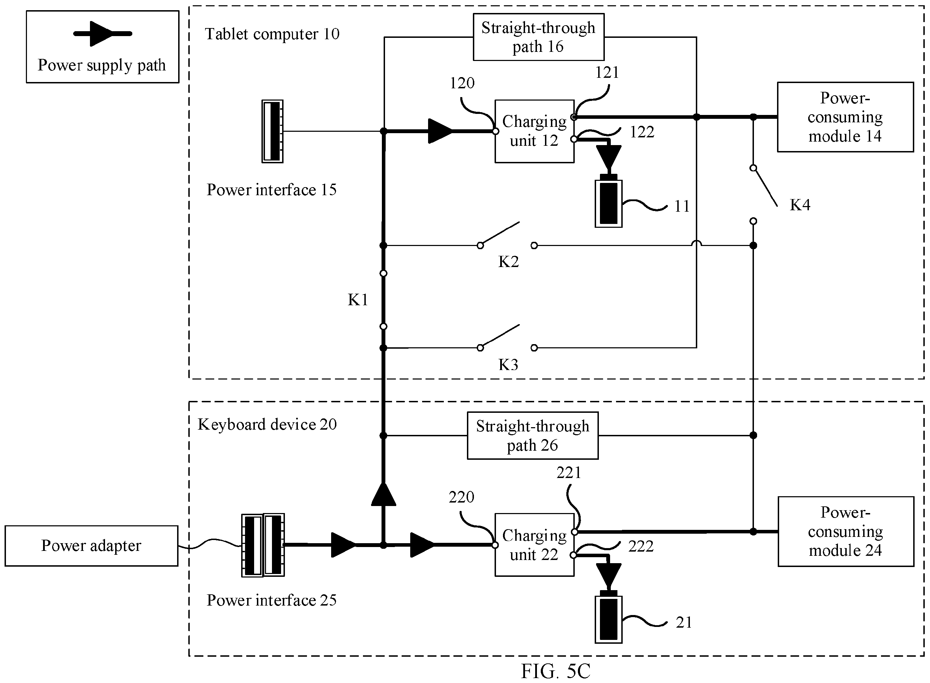

An embodiment of this application further provides another power supply path for charging both the battery 11 and the battery 21. Specifically, FIG. 5C is a schematic of another power supply path for charging both a battery 11 and a battery 21 by using a power adapter connected to a power interface 25.

It may be understood that, in a case shown in FIG. 5B, because the power of the power adapter is directly provided to the charging unit 22, both the power-consuming module 24 and the tablet computer 10 serve as loads of the charging unit 22, and may obtain a power from the output end 221 according to power requirements of the power-consuming module 24 and the tablet computer 10. Therefore, in some embodiments, when the power-consuming module 14 and/or the power-consuming module 24 are in a working state, the electronic device 10 may charge the battery 11 and the battery 21 by using the solution in FIG. 5B.

As shown in FIG. 5C, when only the power interface 15 is connected to a power adapter, if the electronic device 1 needs to charge both the battery 11 and the battery 21, the electronic device 1 may set the charging unit 12 and the charging unit 22 to a charging mode, turn on the switch K1, disconnect the straight-through path 16 and the straight-through path 26, and turn off the switch K2 to the switch K4. In this way, the power adapter may charge the battery 21 by using the charging unit 22, and charge the battery 11 sequentially through the switch K1 and the charging unit 12. In this way, a power at which the charging unit 12 charges the battery 11 no longer passes through the charging unit 22, thereby reducing a quantity of power losses and avoiding a waste of electric energy. In addition, when a power of the power adapter is fixed, charging efficiency may be improved.

It may be understood that, in some embodiments, if the power-consuming module 14 and/or the power-consuming module 24 are/is in a working state, when the battery 11 and the battery 21 are charged through the power supply path shown in FIG. 5C, because consuming power of the power-consuming module 14 and the power-consuming module 24 dynamically change, charging powers output by the power adapter to the charging unit 12 and the charging unit 22 need to be dynamically allocated. Therefore, when the power adapter does not have a capability of dynamically allocating a charging power, the power supply path shown in FIG. 5C may be used to charge the battery 11 and the battery 21 only when neither the power-consuming module 14 nor the power-consuming module 24 is in a working state, that is, when the electronic device 1 is in a power-off state.

It may be understood that, when both the power interface 15 and the power interface 25 are connected to power adapters, the electronic device 1 may turn off the switch K1 to the switch K4, and disconnect the straight-through path 16 and the straight-through path 26. The power adapter connected to the power interface 15 charges the battery 11 through the charging unit 12, and the power adapter connected to the power interface 25 charges the battery 21 through the charging unit 22.

It may be understood that, in some embodiments, when charging both the battery 11 and the battery 21 by using one power adapter, the electronic device 1 may dynamically adjust powers allocated by the power adapter to the two batteries, to ensure that the power adapter can charge the battery 11 and the battery 21 at a high power, thereby improving charging efficiency. A specific allocation scheme is described below, and details are not described herein.

It may be understood that, when neither the power interface 15 nor the power interface 25 is connected to a power adapter, the battery 11 and/or the battery 21 may supply power to the power-consuming module 14 and the power-consuming module 24. A specific manner is described below, and details are not described herein.

It may be understood that setting manners of the switch K1 to the switch K4 in embodiments shown in FIG. 3A to FIG. 5C are merely an example. In some other embodiments, another setting manner may be used to connect and disconnect electrical connections between the power interface 15, the power interface 25, the charging unit 12, the charging unit 22, the power-consuming module 14, and the power-consuming module 24. This is not limited herein.

For example, FIG. 6 is a diagram of another structure of a power supply system of an electronic device 1 according to some embodiments of this application.

As shown in FIG. 6, a power supply system of the electronic device 1 includes a power interface 15, a charging unit 12, a battery 11, a power-consuming module 14, a switch K5, a switch K6, and a straight-through path 16 that are disposed in a tablet computer 10, and a power interface 25, a charging unit 22, a battery 21, a power-consuming module 24, a switch K7, a switch K8, and a straight-through path 26 that are disposed in a keyboard device 20.

A difference between the power supply system of the electronic device 1 shown in FIG. 6 and the power supply system shown in FIG. 3A lies in that the power supply system shown in FIG. 6 implements functions of the foregoing K1 to K4 by using the switch K5 to the switch K8. For an electrical connection manner and a function of the power interface 15, the charging unit 12, the battery 11, the power-consuming module 14, and the straight-through path 16, and an electrical connection manner and a function of the power interface 25, the charging unit 22, the battery 21, the power-consuming module 24, and the straight-through path 16, refer to the embodiment shown in FIG. 3A. Details are not described herein.

The following describes an electrical connection manner of the switches K5 to K8.

Still refer to FIG. 6. One end of the switch K5 is electrically connected to one end of the switch K6, the other end of the switch K5 is electrically connected to the input end 120 of the charging unit 12, and the other end of the switch K6 is electrically connected to the output end 121 of the charging unit 12. One end of the switch K7 is electrically connected to one end of the switch K8, the other end of the switch K7 is electrically connected to the input end 220 of the charging unit 22, and the other end of the switch K8 is electrically connected to the output end 221 of the charging unit 22. One end that is of the switch K5 and that is electrically connected to the switch K6 is electrically connected to one end that is of the switch K7 and that is electrically connected to the switch K8. For example, in some embodiments, the one end that is of the switch K5 and that is electrically connected to the switch K6 and the one end that is of the switch K7 and that is electrically connected to the switch K8 may be electrically connected by using the foregoing electrical connector 3.

The following describes, based on the power supply system shown in FIG. 6, a technical solution in which the electronic device 1 supplies power to the battery 11 and the battery 21.

For example, based on the power supply system shown in FIG. 6, when only the power interface 15 is connected to a power adapter, if the electronic device 1 needs to charge only the battery 21, the electronic device 1 may set the charging unit 12 to a power supply mode, set the charging unit 22 to a charging mode, adjust a voltage that is input by the power adapter to the charging unit 12 to be the same as an output voltage of the battery 11, turn on the switch K6 and the switch K7, connect the straight-through path 16, disconnect the straight-through path 26, and turn off the switch K5 and the switch K8. In this way, the power adapter may charge the battery 21 sequentially through the power interface 15, the straight-through path 16, the switch K6, the switch K7, and the charging unit 22. Therefore, a power for charging the battery 21 does not need to pass through the charging unit 12, thereby avoiding a waste of electric energy. In addition, when a power of the power adapter is fixed, charging efficiency may be improved.

For example, based on the power supply system shown in FIG. 6, when only the power interface 15 is connected to a power adapter, if the electronic device 1 needs to charge both the battery 11 and the battery 21, the electronic device 1 may set the charging unit 12 and the charging unit 22 to a charging mode, turn on the switch K6 and the switch K7, disconnect the straight-through path 16 and the straight-through path 26, and turn off the switch K5 and the switch K8. In this way, the power adapter may charge the battery 11 by using the charging unit 12, and charge the battery 21 sequentially through the charging unit 12, the switch K5, the switch K8, and the charging unit 22. In some other embodiments, when only the power interface 15 is connected to a power adapter, if the electronic device 1 needs to charge both the battery 11 and the battery 21, the electronic device 1 may alternatively set the charging unit 12 and the charging unit 22 to a charging mode, turn on the switch K5 and the switch K7, disconnect the straight-through path 16 and the straight-through path 26, and turn off the switch K6 and the switch K8. In this way, the power adapter may charge the battery 11 by using the charging unit 12, and charge the battery 21 sequentially through the switch K5, the switch K7, and the charging unit 22. In this way, a power at which the charging unit 22 charges the battery 21 no longer passes through the charging unit 12, thereby reducing a quantity of power losses and avoiding a waste of electric energy. In addition, when a power of the power adapter is fixed, charging efficiency may be improved.

It may be understood that, in some embodiments, the electronic device 1 may charge both the battery 11 and the battery 21 in a manner of turning on the switch K5 and the switch K7 only when neither the power-consuming module 14 nor the power-consuming module 24 is in a working state, that is, when the electronic device 1 is in a power-off state.

For example, based on the power supply system shown in FIG. 6, when only the power interface 25 is connected to a power adapter, if the electronic device 1 needs to charge only the battery 11, the electronic device 1 may set the charging unit 22 to a power supply mode, set the charging unit 12 to a charging mode, adjust a voltage that is input by the power adapter to the charging unit 22 to be the same as an output voltage of the battery 21, turn on the switch K5 and the switch K8, connect the straight-through path 26, turn off the switch K6 and the switch K7, and disconnect the straight-through path 16. In this way, the power adapter may charge the battery 11 sequentially through the power interface 25, the straight-through path 26, the switch K8, the switch K5, and the charging unit 12. Therefore, a power for charging the battery 21 does not need to pass through the charging unit 22, thereby avoiding a waste of electric energy. In addition, when a power of the power adapter is fixed, charging efficiency may be improved.

For example, based on the power supply system shown in FIG. 6, when only the power interface 25 is connected to a power adapter, if the electronic device 1 needs to charge both the battery 11 and the battery 21, the electronic device 1 may set the charging unit 12 and the charging unit 22 to a charging mode, turn on the switch K5 and the switch K8, disconnect the straight-through path 16 and the straight-through path 26, and turn off the switch K6 and the switch K7. In this way, the power adapter may charge the battery 21 by using the charging unit 22, and charge the battery 11 sequentially through the charging unit 22, the switch K8, the switch K5, and the charging unit 12. In some other embodiments, when only the power interface 25 is connected to a power adapter, if the electronic device 1 needs to charge both the battery 11 and the battery 21, the electronic device 1 may alternatively set the charging unit 12 and the charging unit 22 to a charging mode, turn on the switch K5 and the switch K7, disconnect the straight-through path 16 and the straight-through path 26, and turn off the switch K6 and the switch K8. In this way, the power adapter may charge the battery 21 by using the charging unit 22, and charge the battery 11 sequentially through the switch K5, the switch K7, and the charging unit 12. In this way, a power at which the charging unit 12 charges the battery 11 no longer passes through the charging unit 22, thereby reducing a quantity of power losses and avoiding a waste of electric energy. In addition, when a power of the power adapter is fixed, charging efficiency may be improved.

It may be understood that, in some embodiments, the electronic device 1 may charge the battery 11 and the battery 21 by using the power supply path shown by turning on the switch K5 and the switch K7 only when neither the power-consuming module 14 nor the power-consuming module 24 is in a working state, that is, the electronic device 1 is in a power-off state.

It may be understood that, in some embodiments, when charging both the battery 11 and the battery 21 by using one power adapter, the electronic device 1 may dynamically adjust powers allocated by the power adapter to the two batteries, to ensure that the power adapter can charge the battery 11 and the battery 21 at a high power, thereby improving charging efficiency. A specific allocation scheme is described below, and details are not described herein.

With reference to the structures of the power supply system of the electronic device 1 shown in FIG. 3A and FIG. 6 and the power supply paths shown in FIG. 4A to FIG. 5C, the following describes a specific technical solution of the power supply method provided in this application.

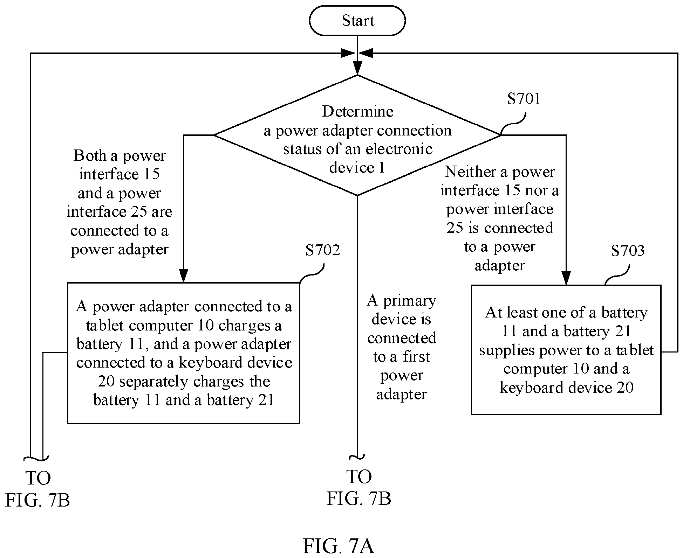

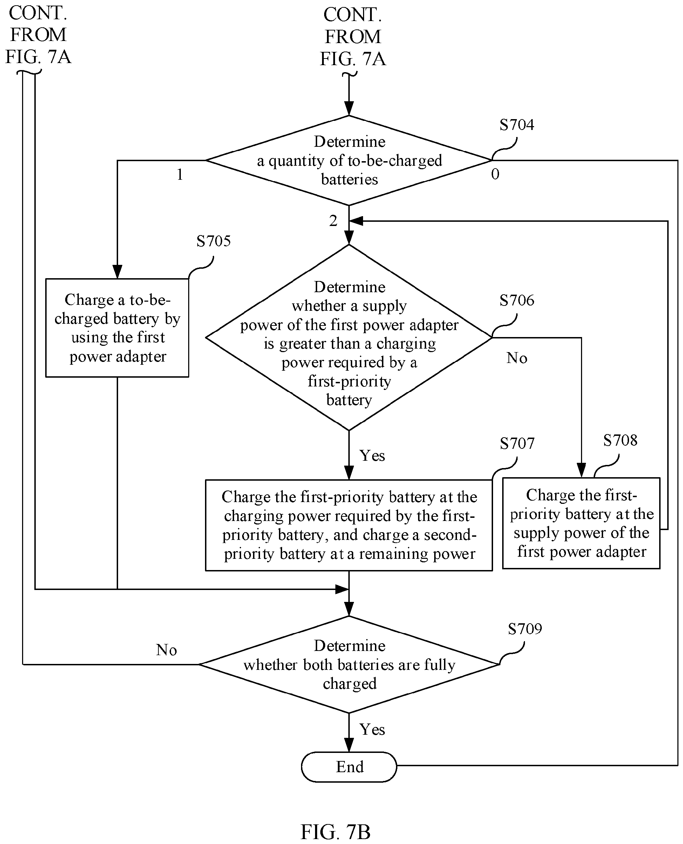

Specifically, FIG. 7A and FIG. 7B are a schematic flowchart of a power supply method according to some embodiments of this application. The method is performed by an electronic device 1 (a tablet computer 10 or a keyboard device 20). As shown in FIG. 7A and FIG. 7B, the method includes the following steps.

S701: Determine a power adapter connection status of the electronic device 1.

For example, the electronic device 1 (the tablet computer 10 or the keyboard device 20) detects the power adapter connection status. If both a power interface 15 and a power interface 25 are connected to a power adapter, it indicates that a battery 11 and a battery 21 may be charged by power adapters connected to the power interface 15 and the power interface 25 respectively, and step S702 is performed. If neither the power interface 15 nor the power interface 25 is connected to a power adapter, it indicates that the battery 11 and/or the battery 21 need/needs to supply power to the electronic device 1, and step S703 is performed. If only one of the power interface 15 and the power interface 25 is connected to a first power adapter, it indicates that the battery 11 and/or the battery 21 can be charged only by the first power adapter, and step S704 is performed.

It may be understood that, if only one of the power interface 15 and the power interface 25 is connected to a power adapter, a device having a power interface connected to the power adapter may be referred to as a primary device, and a device having a power interface not connected to the power adapter may be referred to as a secondary device.

For example, for embodiments shown in FIG. 4A to FIG. 4C, the primary device may be the tablet computer 10, and the secondary device may be the keyboard device 20. For embodiments shown in FIG. 5A to FIG. 5C, the primary device may be the keyboard device 20, and the secondary device may be the tablet computer 10.

S702: The power adapter connected to the tablet computer 10 charges the battery 11, and the power adapter connected to the keyboard device 20 separately charges the battery 11 and the battery 21. For example, when both the power interface 15 and the power interface 25 of the electronic device 1 (the tablet computer 10 or the keyboard device 20) are connected to a power adapter, the power adapter connected to the tablet computer 10 may charge the battery 11, and the power adapter connected to the keyboard device 20 may separately charge the battery 11 and the battery 21.

For example, for the power supply system shown in FIG. 3A, the electronic device 1 (the tablet computer 10 or the keyboard device 20) may turn off the switch K1 to the switch K4, and disconnect the straight-through path 16 and the straight-through path 26. The power adapter connected to the tablet computer 10 charges the battery 11, and the power adapter connected to the keyboard device 20 charges the battery 21.

For another example, for the power supply system shown in FIG. 6, the electronic device 1 (the tablet computer 10 or the keyboard device 20) may turn off the switch K5 to the switch K8, and disconnect the straight-through path 16 and the straight-through path 26. The power adapter connected to the tablet computer 10 charges the battery 11, and the power adapter connected to the keyboard device 20 charges the battery 21.

S703: At least one of the battery 11 and the battery 21 supplies power to the tablet computer 10 and the keyboard device 20.

For example, when neither the power interface 15 nor the power interface 25 is connected to a power adapter, the electronic device 1 (the tablet computer 10 or the keyboard device 20) supplies power to the tablet computer 10 and the keyboard device 20 by using at least one of the battery 11 and the battery 21. A specific power supply manner is described below, and details are not described herein.

S704: Determine a quantity of to-be-charged batteries.

For example, when determining that only the primary device is connected to the first power adapter, the electronic device 1 (the tablet computer 10 or the keyboard device 20) determines the quantity of to-be-charged batteries. If it is determined that the quantity of to-be-charged batteries is 1 (that is, the battery 11 or the battery 21 needs to be charged), step S705 is performed. If it is determined that the quantity of to-be-charged batteries is 2 (that is, the battery 11 and the battery 21 need to be charged), step S706 is performed. If it is determined that the quantity of to-be-charged batteries is 0, the process ends.

It may be understood that, in some embodiments, the to-be-charged battery may be a battery with a remaining battery level less than a corresponding preset remaining battery level. Therefore, the electronic device 1 (the tablet computer 10 or the keyboard device 20) may determine the quantity of to-be-charged batteries based on a remaining battery level of the battery 11 and a remaining battery level of the battery 21.

For example, if the remaining battery level of the battery 11 is less than a corresponding first preset remaining battery level, and the remaining battery level of the battery 21 is less than a corresponding second preset remaining battery level, it is determined that the quantity of to-be-charged batteries is 2. If the remaining battery level of the battery 11 is less than the corresponding first preset remaining battery level and the remaining battery level of the battery 21 is greater than or equal to the second preset remaining battery level, or the remaining battery level of the battery 21 is less than the second preset remaining battery level and the remaining battery level of the battery 11 is greater than or equal to the first preset remaining battery level, it is determined that the quantity of to-be-charged batteries is 1. If the remaining battery level of the battery 11 is greater than or equal to the first preset remaining battery level, and the remaining battery level of the battery 21 is greater than or equal to the second preset remaining battery level, it is determined that the quantity of to-be-charged batteries is 0.

It may be understood that, in some other embodiments, the electronic device 1 may alternatively determine the quantity of to-be-charged batteries in another manner, for example, use a battery that is not fully charged as a to-be-charged battery. This is not limited herein.

S705: Charge the to-be-charged battery by using the first power adapter.

When determining that only one to-be-charged battery needs to be charged, the electronic device 1 (the tablet computer 10 or the keyboard device 20) charges the to-be-charged battery by using the first power adapter.

For example, when the to-be-charged battery is a battery on the primary device, the electronic device 1 (the tablet computer 10 or the keyboard device 20) may directly charge the to-be-charged battery by using a charging unit on the primary device. When the to-be-charged battery is a battery on the secondary device, the electronic device 1 (the tablet computer 10 or the keyboard device 20) may clamp a voltage that is output by the first power adapter to an input end of the charging unit on the primary device to be the same as a voltage of the battery on the primary device, a straight-through path connecting the input end and an output end of the charging unit on the primary device is connected, and the first power adapter charges the to-be-charged battery through the straight-through path and a charging unit on the secondary device. Therefore, a power for charging the to-be-charged battery does not need to pass through the charging unit on the primary device, thereby reducing a waste of electric energy and helping improve charging efficiency.

For example, for the case shown in FIG. 4A, the primary device is the tablet computer 10, and the to-be-charged battery is the battery 21. The electronic device 1 (the tablet computer 10 or the keyboard device 20) may set the charging unit 12 to a power supply mode, set the charging unit 22 to a charging mode, adjust a voltage that is input by the power adapter to the charging unit 12 to be the same as an output voltage of the battery 11, turn on the switch K3, connect the straight-through path 16, disconnect the straight-through path 26, and turn off the switch K1, the switch K2, and the switch K4. In this way, the power adapter may charge the battery 21 sequentially through the power interface 15, the straight-through path 16, the switch K3, and the charging unit 22.

For another example, for the case shown in FIG. 5A, the primary device is the keyboard device 20, and the to-be-charged battery is the battery 11. The electronic device 1 (the tablet computer 10 or the keyboard device 20) may set the charging unit 22 to a power supply mode, set the charging unit 12 to a charging mode, adjust a voltage that is input by the power adapter to the charging unit 22 to be the same as an output voltage of the battery 21, turn on the switch K2, connect the straight-through path 26, disconnect the straight-through path 16, and turn off the switch K1, the switch K3, and the switch K4. In this way, the power adapter may charge the battery 11 sequentially through the power interface 25, the straight-through path 26, the switch K2, and the charging unit 12.

S706: Determine whether a supply power of the first power adapter is greater than a charging power required by a first-priority battery.

For example, when determining that the two batteries need to be charged, the electronic device 1 (the tablet computer 10 or the keyboard device 20) first determines whether the supply power of the first power adapter is greater than the charging power required by the first-priority battery. If it is determined that the supply power of the first power adapter is greater than the charging power required by the first-priority battery, it indicates that the supply power of the first power adapter is sufficient, the two batteries may be charged at the same time, and step S707 is performed. Otherwise, it indicates that the supply power of the first power adapter is insufficient, only one battery can be charged, and step S708 is performed.

It may be understood that a priority of a battery indicates a sequence of charging the battery. In some embodiments, the priority of the battery may be set by a manufacturer of the electronic device 1 based on a function of a device in which the battery is located, or may be set by a user, or may be dynamically determined by the tablet computer 10 or the keyboard device 20 based on a remaining battery level of the battery in the electronic device 1, or the like. A setting body and a setting manner of the priority of the battery are not limited in this embodiment of this application. For example, because the tablet computer 10 may be usually used independently, the electronic device 1 (the tablet computer 10 or the keyboard device 20) may set the battery 11 as the first-priority battery, and set the battery 21 as a second-priority battery. A charging sequence of the first-priority battery is prior to that of the second-priority battery. For another example, when remaining battery level values of the battery 11 and the battery 21 are both greater than a preset warning battery level value, or the remaining battery level values of the battery 11 and the battery 21 are both less than or equal to the preset warning battery level value, the first-priority battery may be the battery 11, and the second-priority battery may be the battery 21. However, when a remaining battery level value of only one battery in the battery 11 and the battery 21 is less than the corresponding preset warning battery level value, the first-priority battery may be a battery having a remaining battery level value less than the corresponding preset warning battery level value, and the other battery is the second-priority battery.

It may be understood that the preset warning battery level value of a battery may be a battery level value indicating that the battery needs to be charged immediately. For example, the preset warning battery level value of the battery may be a fixed value, for example, 100 mAh, or may be a percentage of a battery capacity, for example, 3%. A specific value of the preset warning battery level value is not limited herein.

It may be understood that a charging power required by the battery may be a dynamic value, and decreases with an increase in a battery level. Therefore, a value relationship between the supply power of the first power adapter and the charging power required by the first-priority battery dynamically changes with a charging time.

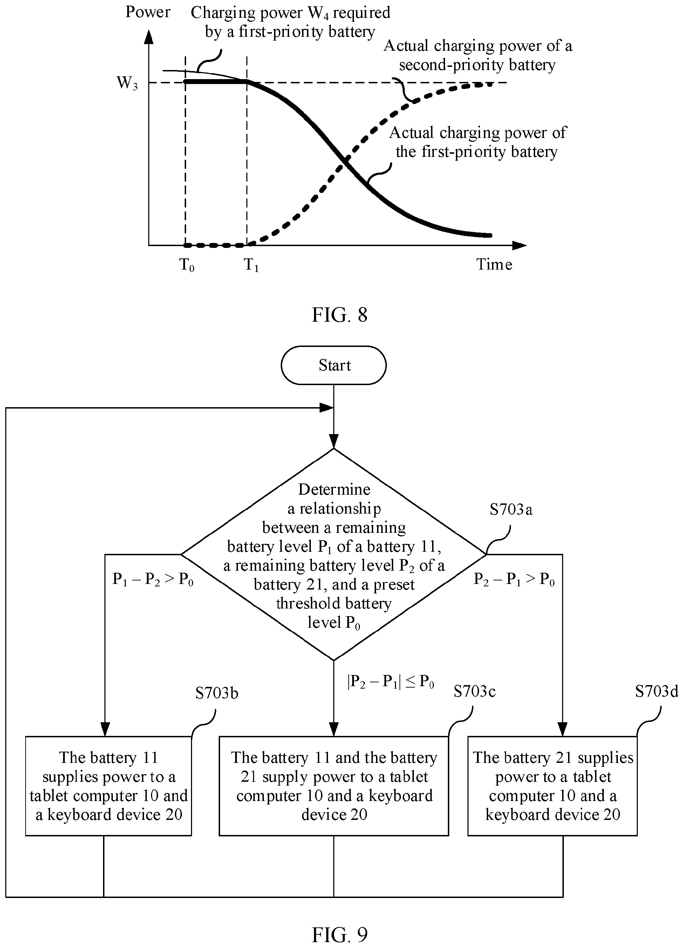

For example, refer to FIG. 8. It is assumed that the supply power of the first power adapter is W₃, and a charging power W₄ required by the first-priority battery gradually decreases with the charging time. Further, it is assumed that the first power adapter is connected to a power interface of the primary device at a moment T₀. In a process from the moment T₀ to a moment T₁, because W₃ is less than W₄, step S708 is performed. After the moment T₁, because W₃ is greater than W₄, step S707 is performed.

S707: Charge the first-priority battery at the charging power required by the first-priority battery, and charge the second-priority battery at a remaining power.

For example, when determining that the supply power of the first power adapter is greater than the charging power required by the first-priority battery, the electronic device 1 (the tablet computer 10 or the keyboard device 20) charges the first-priority battery at the charging power required by the first-priority battery, and charges the second-priority battery at the remaining power.

In this way, there is no need to wait until the first-priority battery is fully charged before charging the second-priority battery. When it is determined that the supply power of the first power adapter is greater than the charging power required by the first-priority battery, the remaining power may be allocated to the second-priority battery, so that a power of the power adapter is fully used, thereby improving charging efficiency. For example, with reference to FIG. 8, after the moment T₁, because the charging power W₄ required by the first-priority battery gradually decreases, a power allocated by the electronic device 1 to the first-priority battery for actual charging gradually decreases, and a power allocated by the electronic device 1 to the second-priority battery for actual charging gradually increases with a decrease in an actual charging power of the first-priority battery. The first power adapter may continuously charge at a high power, thereby improving charging efficiency.

It may be understood that the remaining power is a power obtained by subtracting a power allocated to the first-priority battery from the supply power of the first power adapter. In some embodiments, the remaining power may be represented as a difference obtained by subtracting the charging power required by the first-priority battery from the supply power of the first power adapter. In some other embodiments, the remaining power may alternatively be any positive value less than a difference obtained by subtracting the charging power required by the first-priority battery from the supply power of the first power adapter.

It may be understood that, as described in embodiments shown in FIG. 4B, FIG. 4C, FIG. 5B, and FIG. 5C, the electronic device 1 (the tablet computer 10 or the keyboard device 20) may charge the battery 11 and the battery 21 in different manners based on a usage status of the electronic device 1, for example, whether the electronic device 1 is powered on, to further improve charging efficiency. Details are described below, and details are not described herein.

S708: Charge the first-priority battery at the supply power of the first power adapter.

For example, when determining that the supply power of the first power adapter is less than or equal to the charging power required by the first-priority battery, the electronic device 1 (the tablet computer 10 or the keyboard device 20) charges the first-priority battery at the supply power of the first power adapter, to ensure that the first-priority battery is first charged.

It may be understood that, when only the first-priority battery is charged, if the first-priority battery is a battery in the primary device, a switch and a straight-through path in a power supply system in the electronic device 1 (the tablet computer 10 or the keyboard device 20) may be turned off/disconnected, and the first power adapter directly charges the first-priority battery at the supply power of the first power adapter.

For example, for the power supply system shown in FIG. 3A, if the primary device is the tablet computer 10, the first-priority battery is the battery 11, and the supply power of the first power adapter is less than or equal to a charging power required by the battery 11, the electronic device 1 (the tablet computer 10 or the keyboard device 20) may set the charging unit 12 to a charging mode, set the charging unit 22 to a power supply mode, turn off the switches K1 to K4, and disconnect the straight-through path 16 and the straight-through path 26, to charge the battery 11 by using the charging unit 12 at the supply power of the first power adapter. Similarly, for the power supply system shown in FIG. 6, if the primary device is the tablet computer 10, the first-priority battery is the battery 11, and the supply power of the first power adapter is less than or equal to a charging power required by the battery 11, the electronic device 1 (the tablet computer 10 or the keyboard device 20) may set the charging unit 12 to a charging mode, set the charging unit 22 to a power supply mode, turn off the switches K5 to K8, and disconnect the straight-through path 16 and the straight-through path 26, to charge the battery 11 by using the charging unit 12 at the supply power of the first power adapter.

For another example, for the power supply system shown in FIG. 3A, if the primary device is the keyboard device 20, the first-priority battery is the battery 21, and the supply power of the first power adapter is less than or equal to a charging power required by the battery 21, the electronic device 1 (the tablet computer 10 or the keyboard device 20) may set the charging unit 12 to a power supply mode, set the charging unit 22 to a charging mode, turn off the switches K1 to K4, and disconnect the straight-through path 16 and the straight-through path 26, to charge the battery 21 by using the charging unit 22 at the supply power of the first power adapter. Similarly, for the power supply system shown in FIG. 6, if the primary device is the keyboard device 20, the first-priority battery is the battery 21, and the supply power of the first power adapter is less than or equal to a charging power required by the battery 21, the electronic device 1 (the tablet computer 10 or the keyboard device 20) may set the charging unit 12 to a power supply mode, set the charging unit 22 to a charging mode, turn off the switches K5 to K8, and disconnect the straight-through path 16 and the straight-through path 26, to charge the battery 21 by using the charging unit 22 at the supply power of the first power adapter.

It may be understood that, when only the first-priority battery is charged, if the first-priority battery is not a battery in the primary device, a voltage that is output by the first power adapter to an input end of a charging unit in the primary device may be clamped to a voltage of the battery in the primary device, and a straight-through path in the primary device is connected, to avoid that a power for charging the first-priority battery passes through the charging unit in the primary device, thereby reducing an electric energy loss and improving charging efficiency.

For example, for the power supply system shown in FIG. 3A, if the primary device is the tablet computer 10, the first-priority battery is the battery 21, and the supply power of the first power adapter is less than or equal to a charging power required by the battery 11, the electronic device 1 may charge the battery 21 in the manner shown in FIG. 4A, so that a power for charging the battery 21 can be prevented from passing through the charging unit 12, thereby reducing an electric energy loss and improving charging efficiency. If the primary device is the keyboard device 20, the first-priority battery is the battery 11, and the supply power of the first power adapter is less than or equal to a charging power required by the battery 21, the electronic device 1 may charge the battery 11 in the manner shown in FIG. 5A, so that a power for charging the battery 11 can be prevented from passing through the charging unit 22, thereby reducing an electric energy loss and improving charging efficiency.

It may be understood that because the charging power required by the first-priority battery decreases with an increase in a battery level of the first-priority battery, after determining that the first-priority battery is charged at the supply power of the first power adapter, step S706 may be performed, and the electronic device 1 continues to determine a relationship between the supply power of the first power adapter and the charging power required by the first-priority battery.

S709: Determine whether both batteries are fully charged.

For example, the electronic device 1 (the tablet computer 10 or the keyboard device 20) determines whether both batteries are fully charged. If both the batteries are fully charged, charging ends; or otherwise, step S701 is performed.

According to the power supply method provided in this embodiment of this application, a power loss generated when the electronic device 1 is connected to only one power adapter to charge the battery 11 and the battery 21 can be reduced, and charging efficiency can be improved. In addition, when charging two batteries at the same time, the electronic device 1 dynamically allocates, based on priorities of the batteries, a power for charging each battery, so that the power adapter can keep charging the battery 11 and the battery 21 at a high power, thereby improving charging efficiency. The following describes a technical solution in step S703 in which the electronic device 1 supplies power to the tablet computer 10 and the keyboard device 20 by using the battery 11 and/or the battery 21 when neither the power interface 15 nor the power interface 25 is connected to a power adapter.

Specifically, FIG. 9 is a schematic flowchart of supplying power to a tablet computer 10 and a keyboard device 20 by using a battery 11 and/or a battery 21 according to some embodiments of this application. As shown in FIG. 9, the procedure is performed by an electronic device 1 (the tablet computer 10 or the keyboard device 20), and includes the following steps.

S703a: Determine a relationship between a remaining battery level P₁ of the battery 11, a remaining battery level P₂ of the battery 21, and a preset threshold battery level P₀.

When neither a power interface 15 nor a power interface 25 is connected to a power adapter, the electronic device 1 (the tablet computer 10 or the keyboard device 20) may determine a relationship between the remaining battery level P₁ of the battery 11, the remaining battery level P₂ of the battery 21, and the preset threshold battery level P₀, and supply power to the tablet computer 10 and the keyboard device 20 by using different batteries based on the relationship between P₁, P₂, and P₀.

For example, if P₁ - P₂ > P₀, it indicates that the remaining battery level of the battery 11 is much higher than the remaining battery level of the battery 21, and step S703b is performed. If |P₂ - P₁| ≤ P₀, it indicates that a difference between the remaining battery level of the battery 21 and the remaining battery level of the battery 11 is small, and step S703c is performed. If P₂ - P₁ > P₀, it indicates that the remaining battery level of the battery 21 is much higher than the remaining battery level of the battery 11, and step S703d is performed.

S703b: The battery 11 supplies power to the tablet computer 10 and the keyboard device 20.

For example, when P₁ - P₂ > P₀, the electronic device 1 (the tablet computer 10 or the keyboard device 20) may supply power to the tablet computer 10 and the keyboard device 20 by using the battery 11.

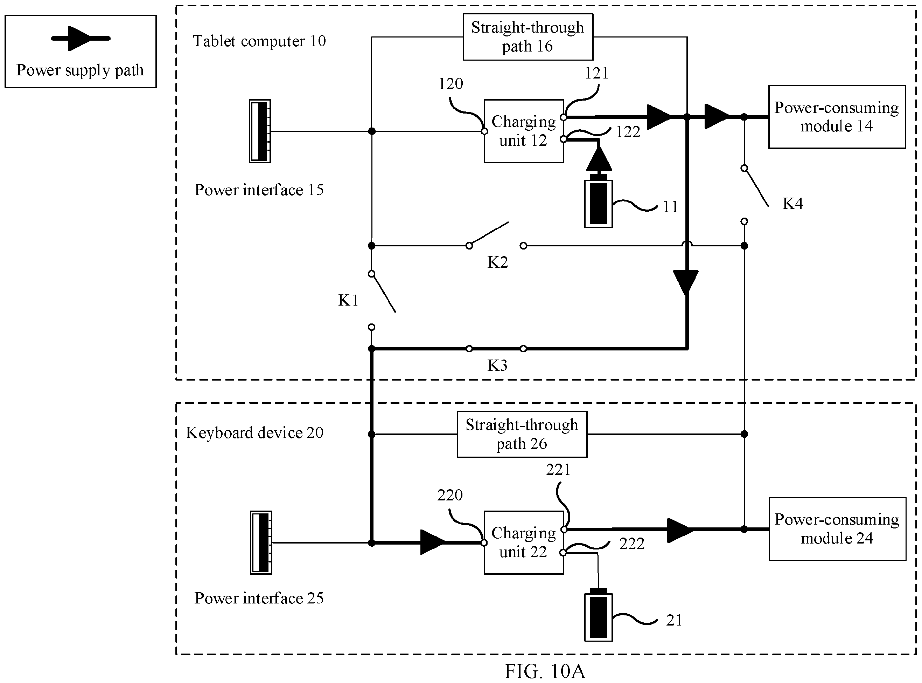

For example, for the power supply system shown in FIG. 3A, with reference to FIG. 10A, the electronic device 1 (the tablet computer 10 or the keyboard device 20) may set a charging unit 12 to a power supply mode, and set a charging unit 22 to a charging mode. Then, an output end 121 of the charging unit 12 and an input end 220 of the charging unit 22 are electrically connected by turning on a switch K3, and other switches are turned off and other straight-through paths are disconnected. In this way, the battery 11 may supply power to the keyboard device 20 sequentially through the charging unit 12, the switch K3, and the charging unit 22, and supply power to the tablet computer 10 through the charging unit 12.

Similarly, for the power supply system shown in FIG. 6, the electronic device 1 (the tablet computer 10 or the keyboard device 20) may electrically connect the output end 121 of the charging unit 12 to the input end 220 of the charging unit 22 by turning on the switch K6 and the switch K7. In this way, the battery 11 may supply power to the keyboard device 20 sequentially through the charging unit 12, the switch K6, the switch K7, and the charging unit 22, and supply power to the tablet computer 10 through the charging unit 12.

S703c: The battery 11 and the battery 21 supply power to the tablet computer 10 and the keyboard device 20.

For example, when |P₂ - P₁| ≤ P₀, the electronic device 1 (the tablet computer 10 or the keyboard device 20) may supply power to the tablet computer 10 and the keyboard device 20 by using the battery 11 and the battery 21 respectively.

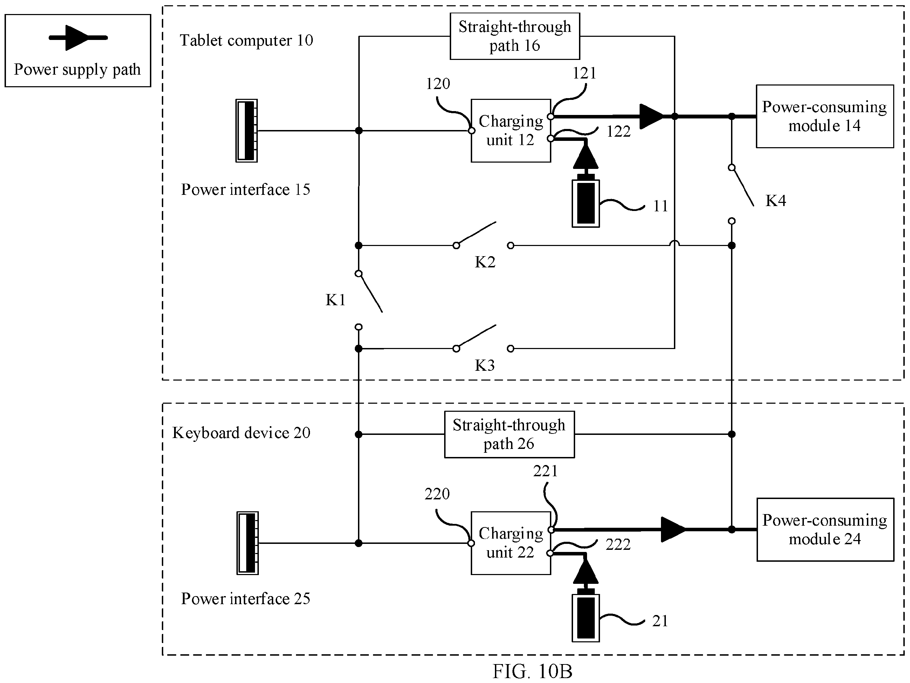

For example, for the power supply system shown in FIG. 3A, with reference to FIG. 10B, the electronic device 1 (the tablet computer 10 or the keyboard device 20) may set the charging unit 12 and the charging unit 22 to a power supply mode, turn off a switch K1 to a switch K4, and disconnect a straight-through path 16 and a straight-through path 26. In this way, the battery 11 may supply power to the tablet computer 10 through the charging unit 12, and the battery 21 may supply power to the keyboard device 20 through the charging unit 22. Similarly, for the power supply system shown in FIG. 6, the electronic device 1 (the tablet computer 10 or the keyboard device 20) may set the charging unit 12 and the charging unit 22 to a power supply mode, turn off the switch K5 to the switch K8, and disconnect the straight-through path 16 and the straight-through path 26. In this way, the battery 11 may supply power to the tablet computer 10 through the charging unit 12, and the battery 21 may supply power to the keyboard device 20 through the charging unit 22.

For example, in some other embodiments, when |P₂ - P₁| ≤ P₀, the electronic device 1 (the tablet computer 10 or the keyboard device 20) may alternatively supply power to the tablet computer 10 and the keyboard device 20 by using the battery 11 and the battery 21 together, to increase a power provided by the battery 11 and the battery 21 for the tablet computer 10 and the keyboard device 20 and avoid that a power of a single battery cannot meet requirements of the tablet computer 10 and the keyboard device 20.

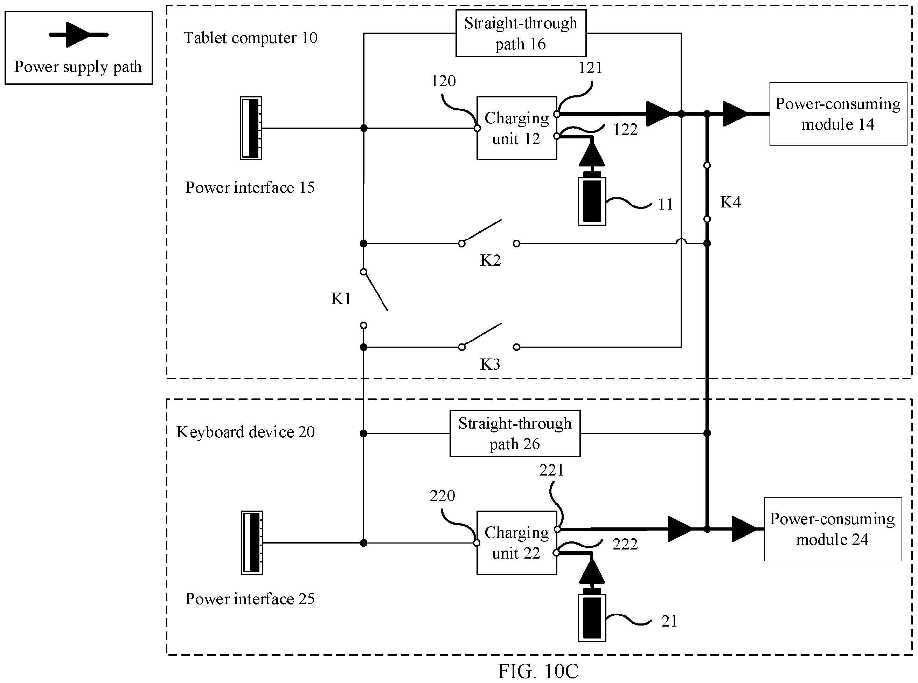

For example, for the power supply system shown in FIG. 3A, with reference to FIG. 10C, the electronic device 1 (the tablet computer 10 or the keyboard device 20) may set the charging unit 12 and the charging unit 22 to a power supply mode, and clamp a voltage that is output by the battery 11 to the output end 121 of the charging unit 12 to be the same as a voltage that is output by the battery 21 to an output end 221 of the charging unit 22. Then, the switch K4 is turned on, the switch K1 to the switch K3 are turned off, and the straight-through path 16 and the straight-through path 26 are disconnected. In this way, the battery 11 and the battery 21 supply power to the tablet computer 10 and the keyboard device 20 together. Similarly, for the power supply system shown in FIG. 6, the electronic device 1 (the tablet computer 10 or the keyboard device 20) may set the charging unit 12 and the charging unit 22 to a power supply mode, and clamp a voltage that is output by the battery 11 to the output end 121 of the charging unit 12 to be the same as a voltage that is output by the battery 21 to the output end 221 of the charging unit 22. Then, the switch K6 and the switch K8 are turned on, the switch K5 and the switch K7 are turned off, and the straight-through path 16 and the straight-through path 26 are disconnected. In this way, the battery 11 and the battery 21 supply power to the tablet computer 10 and the keyboard device 20 together.

S703d: The battery 21 supplies power to the tablet computer 10 and the keyboard device 20.

For example, when P₂ - P₁ > P₀, the electronic device 1 (the tablet computer 10 or the keyboard device 20) may supply power to the tablet computer 10 and the keyboard device 20 by using the battery 21.

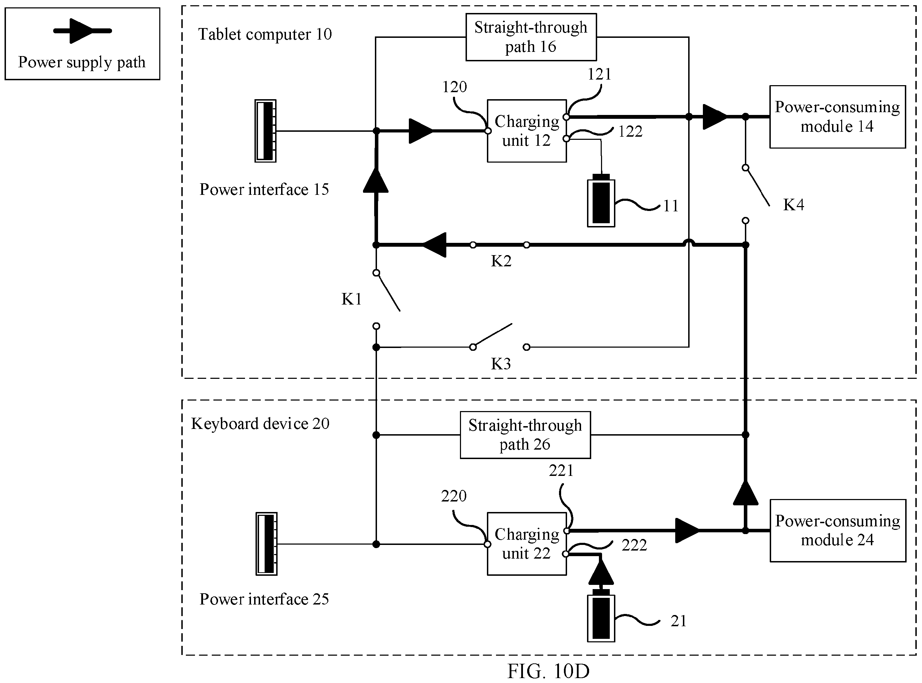

For example, for the power supply system shown in FIG. 3A, with reference to FIG. 10D, the electronic device 1 (the tablet computer 10 or the keyboard device 20) may set the charging unit 12 to a charging mode, and set the charging unit 22 to a power supply mode. Then, the output end 221 of the charging unit 22 and the input end 120 of the charging unit 12 are electrically connected by turning on a switch K2, and other switches are turned off and other straight-through paths are disconnected. In this way, the battery 21 may supply power to the tablet computer 10 sequentially through the charging unit 22, the switch K2, and the charging unit 12, and supply power to the keyboard device 20 through the charging unit 22.

Similarly, for the power supply system shown in FIG. 6, the electronic device 1 (the tablet computer 10 or the keyboard device 20) may electrically connect the output end 221 of the charging unit 22 to the input end 120 of the charging unit 12 by turning on the switch K5 and the switch K8. In this way, the battery 21 may supply power to the tablet computer 10 sequentially through the charging unit 22, the switch K8, the switch K5, and the charging unit 12, and supply power to the keyboard device 20 through the charging unit 22.

The tablet computer 10 and the keyboard device 20 are supplied with power according to the embodiment shown in FIG. 9, so that remaining battery levels of the battery 11 and the battery 21 can be balanced. In addition, when one battery cannot provide a sufficient power for the tablet computer 10 and the keyboard device 20, the battery 11 and the battery 21 may provide a sufficient power for the tablet computer 10 and the keyboard device 20 together, to meet power requirements of the tablet computer 10 and the keyboard device 20.

It may be understood that the solution in which the tablet computer 10 and the keyboard device 20 are supplied with power by using the battery 11 and/or the battery 21 shown in FIG. 9 is merely an example. In some other embodiments, the tablet computer 10 and the keyboard device 20 may alternatively be supplied with power by using the battery 11 and/or the battery 21 in another manner. This is not limited herein. For example, in some embodiments, the electronic device 1 (the tablet computer 10 or the keyboard device 20) may always supply power to the tablet computer 10 and the keyboard device 20 by using the battery 11 and the battery 21 together.

The following describes the technical solution of charging the battery 11 and the battery 21 at the same time based on the usage status of the electronic device 1 mentioned in step S707.

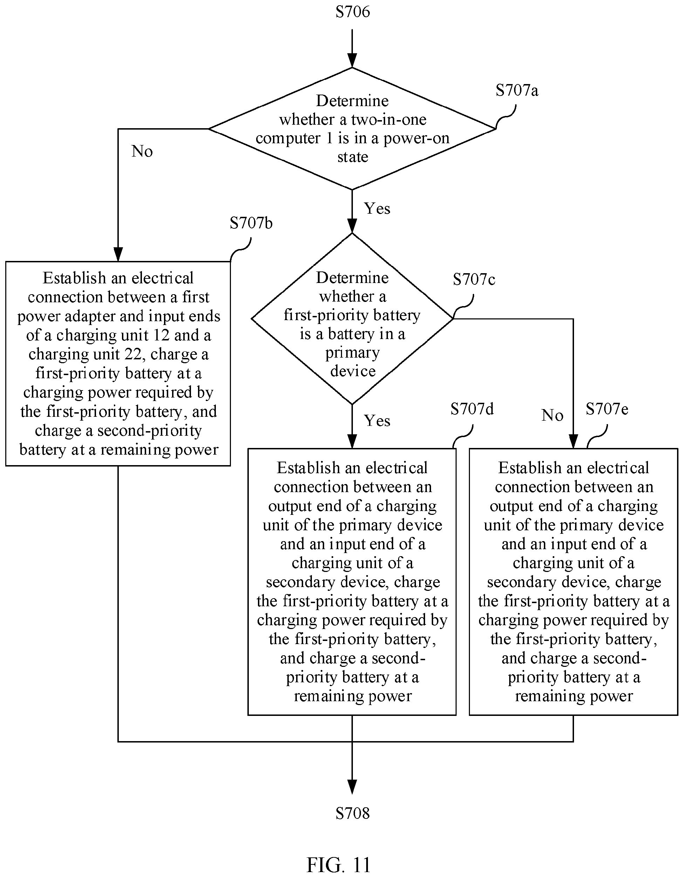

Specifically, FIG. 11 is a schematic flowchart of charging both a battery 11 and a battery 21 by an electronic device 1 based on a usage status of the electronic device 1 according to some embodiments of this application. The procedure is performed by the electronic device 1 (a tablet computer 10 or a keyboard device 20). As shown in FIG. 11, the procedure includes the following steps.

S707a: Determine whether the electronic device 1 is in a power-on state.

For example, the electronic device 1 (the tablet computer 10 or the keyboard device 20) may determine whether the electronic device 1 is in a power-on state. If the electronic device 1 is in the power-on state, it indicates that a first power adapter cannot be directly electrically connected to a charging unit 12 and a charging unit 22 to charge the battery 11 and the battery 21, and step S707c is performed. If the electronic device 1 is in the power-off state, it indicates that the first power adapter can be directly electrically connected to the charging unit 12 and the charging unit 22 to charge the battery 11 and the battery 21, and step S707b is performed.

S707b: Establish an electrical connection between the first power adapter and input ends of the charging unit 12 and the charging unit 22, charge a first-priority battery at a charging power required by the first-priority battery, and charge a second-priority battery at a remaining power. For example, when the electronic device 1 (the tablet computer 10 or the keyboard device 20) is in a power-off state, the electronic device 1 establishes an electrical connection between the first power adapter and the input ends of the charging unit 12 and the charging unit 22, and limits a charging power upper limit of a charging unit of a device in which the second-priority battery is located to the foregoing remaining power. In this way, the electronic device 1 may charge the first-priority battery by using a charging unit of a device in which the first-priority battery is located at a charging power required by the first-priority battery, and charge the second-priority battery by using the charging unit of the device in which the second-priority battery is located at the remaining power.

For example, for cases shown in FIG. 4C and FIG. 5C, when the first-priority battery is the battery 11, the electronic device 1 (the tablet computer 10 or the keyboard device 20) may set the charging unit 12 and the charging unit 22 to a charging mode, turn on the switch K1, turn off another switch and disconnect another straight-through path, set a power upper limit for charging the battery 21 by the charging unit 22 to the foregoing remaining power (for example, a difference obtained by subtracting the charging power required by the battery 11 from the supply power of the first power adapter, or a positive value less than the difference), and not limit a charging power of the charging unit 12. In this way, the charging unit 12 may charge the battery 11 at the charging power required by the battery 11, and during this period, the charging unit 22 may charge the battery 21 at the remaining power.

For another example, for cases shown in FIG. 4C and FIG. 5C, when the first-priority battery is the battery 21, the electronic device 1 (the tablet computer 10 or the keyboard device 20) may set the charging unit 12 and the charging unit 22 to a charging mode, turn on the switch K1, turn off another switch and disconnect another straight-through path, set a power upper limit for charging the battery 11 by the charging unit 12 to the foregoing remaining power (for example, a difference obtained by subtracting the charging power required by the battery 21 from the supply power of the first power adapter, or a positive value less than the difference), and not limit a charging power of the charging unit 22. In this way, the charging unit 22 may charge the battery 21 at the charging power required by the battery 21, and during this period, the charging unit 12 may charge the battery 11 at the remaining power.

Similarly, for the power supply system shown in FIG. 6, the battery 11 and the battery 21 may also be charged in a similar manner. A difference from the cases shown in FIG. 4C and FIG. 5C lies in that the electronic device 1 (the tablet computer 10 or the keyboard device 20) electrically connects the first power adapter to the input end of the charging unit 12 and the input end of the charging unit 22 by turning on the switch K5 and the switch K7 and turning off another switch and disconnecting another straight-through path.

S707c: Determine whether the first-priority battery is a battery in the primary device.

For example, when the electronic device 1 (the tablet computer 10 or the keyboard device 20) is in a power-on state, the electronic device 1 determines whether the first-priority battery is the battery in the primary device. If the first-priority battery is the battery in the primary device, step S707d is performed; or if the first-priority battery is not the battery in the primary device, step S707e is performed.

S707d: Establish an electrical connection between an output end of a charging unit of the primary device and an input end of a charging unit of the secondary device, charge the first-priority battery at the charging power required by the first-priority battery, and charge the second-priority battery at the remaining power.

For example, when the first-priority battery is the battery in the primary device, the electronic device 1 (the tablet computer 10 or the keyboard device 20) establishes an electrical connection between the output end of the charging unit of the primary device and the input end of the charging unit of the secondary device, and limits a charging power of the charging unit of the secondary device for the second-priority battery, for example, sets a power upper limit for charging the second-priority battery by the charging unit of the secondary device to the foregoing remaining power, to ensure that the first-priority battery is charged at the charging power required by the first-priority battery and the second-priority battery is charged at the remaining power.

For example, in the case shown in FIG. 4B, the primary device is the tablet computer 10. When the first-priority battery is the battery 11, the electronic device 1 (the tablet computer 10 or the keyboard device 20) may establish an electrical connection between the output end of the charging unit (charging unit 12) of the primary device and the input end of the charging unit (charging unit 22) of the secondary device by turning on the switch K3, and set an upper power limit for charging the battery 21 by the charging unit 22 to the remaining power, to ensure that the charging unit 12 can charge the battery 11 at the charging power required by the battery 11, and ensure that the charging unit 22 charges the battery 21 at the remaining power.

Similarly, for the power supply system shown in FIG. 6, when the primary device is the tablet computer 10, the electronic device 1 (the tablet computer 10 or the keyboard device 20) may also charge the battery 11 and the battery 21 in a similar manner. A difference from the case shown in FIG. 4B lies in that the electronic device 1 (the tablet computer 10 or the keyboard device 20) establishes an electrical connection between the output end of the charging unit (charging unit 12) of the primary device and the input end of the charging unit (charging unit 22) of the secondary device by turning on the switch K6 and the switch K7.

For another example, in the case shown in FIG. 5B, the primary device is the keyboard device 20. When the first-priority battery is the battery 21, the electronic device 1 (the tablet computer 10 or the keyboard device 20) may establish an electrical connection between the output end of the charging unit (charging unit 22) of the primary device and the input end of the charging unit (charging unit 12) of the secondary device by turning on the switch K2, and set an upper power limit for charging the battery 11 by the charging unit 12 to the foregoing remaining power, to ensure that the charging unit 22 can charge the battery 21 at the charging power required by the battery 21, and ensure that the charging unit 12 charges the battery 11 at the remaining power.

Similarly, for the power supply system shown in FIG. 6, when the primary device is the keyboard device 20, the electronic device 1 (the tablet computer 10 or the keyboard device 20) may also charge the battery 11 and the battery 21 in a similar manner. A difference from the case shown in FIG. 5B lies in that the electronic device 1 (the tablet computer 10 or the keyboard device 20) establishes an electrical connection between the output end of the charging unit (charging unit 22) of the primary device and the input end of the charging unit (charging unit 12) of the secondary device by turning on the switch K5 and the switch K8.

S707e: Establish an electrical connection between an output end of a charging unit of the primary device and an input end of a charging unit of the secondary device, charge the first-priority battery at the charging power required by the first-priority battery, and charge the second-priority battery at the remaining power.

For example, when the first-priority battery is a battery in the secondary device, the electronic device 1 (the tablet computer 10 or the keyboard device 20) establishes an electrical connection between the output end of the charging unit of the primary device and the input end of the charging unit of the secondary device, and limits a charging power of the charging unit of the primary device for the second-priority battery, for example, sets a power upper limit for charging the second-priority battery by the charging unit of the primary device to the foregoing remaining power, to ensure that the first-priority battery is charged at the charging power required by the first-priority battery and the second-priority battery is charged at the remaining power.

It may be understood that, for cases shown in FIG. 4B, FIG. 5B, and FIG. 6, a difference from step S707d lies in that, when the first-priority battery is the battery in the secondary device, the electronic device 1 (the tablet computer 10 or the keyboard device 20) sets a power upper limit for charging the second-priority battery by the charging unit of the primary device to the foregoing remaining power, to ensure that the first-priority battery is charged at the charging power required by the first-priority battery and the second-priority battery is charged at the remaining power. For example, for the case shown in FIG. 4B or for the case in which the primary device is the tablet computer 10 in FIG. 6, if the first-priority battery is the battery 21, the upper power limit for charging the battery 11 by the charging unit 12 is set to the remaining power. For the case shown in FIG. 5B or for the case in which the primary device is the keyboard device 20 in FIG. 6, if the first-priority battery is the battery 11, the upper power limit for charging the battery 21 by the charging unit 22 is set to the remaining power.

It may be understood that the specific implementation of charging the first-priority battery at the charging power required by the first-priority battery and charging the second-priority battery at the remaining power shown in step S707a to step S707e is merely an example. In some other embodiments, another manner may be used, and this is not limited herein.

Both the battery 11 and the battery 21 are charged according to the method provided in the embodiment shown in FIG. 11, so that a power for charging a battery can be prevented from passing through two charging units, thereby reducing a power loss in a charging process and improving charging efficiency. In addition, when the supply power of the first power adapter is greater than the charging power required by the first-priority battery, the remaining power may be allocated to the second-priority battery, so that the first power adapter can charge the battery 11 and the battery 21 at a high power, thereby improving charging efficiency.

It may be understood that the technical solution of charging both the battery 11 and the battery 21 according to the method provided in the embodiment shown in FIG. 11 is merely an example. In some other embodiments, the electronic device 1 may always use the solution in step S707b to charge both the battery 11 and the battery 21, or always use the solution in step S707d and step 707e to charge both the battery 11 and the battery 21. This is not limited herein.

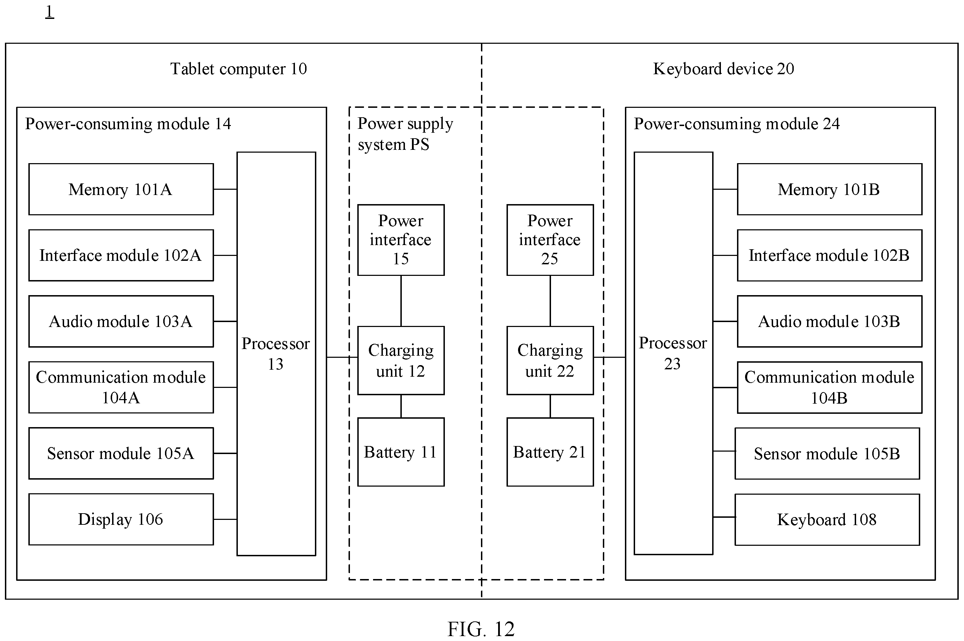

Further, FIG. 12 is a diagram of a hardware structure of a two-in-one computer 1 according to some embodiments of this application.

As shown in FIG. 12, the two-in-one computer 1 includes a processor 13, a processor 23, a memory 101A/101B, an interface module 102A/102B, an audio module 103A/103B, a communication module 104A/104B, a sensor module 105A/105B, a display 106, a power supply system PS-1, and a keyboard 108. The processor 13, the memory 101A, the interface module 102A, the audio module 103A, the communication module 104A, the sensor module 105A, and the display 106 are disposed on the side of a tablet computer 10. The processor 23, the memory 101B, the interface module 102B, the audio module 103B, the communication module 104B, the sensor module 105B, and the keyboard 108 are disposed on the side of a keyboard device 20.

The processor 13/23 may include at least one processing unit, for example, a central processing unit (Central Processing Unit, CPU), a graphics processing unit (Graphics Processing Unit, GPU), a digital signal processor (Digital Signal Processor, DSP), a microprocessor (Micro-programmed Control Unit, MCU), an artificial intelligence (Artificial Intelligence, AI) processor, or a programmable logic device (Field Programmable Gate Array, FPGA). Different processing units may be separate components, or may be integrated into one or more processors. The processor 13/23 may be configured to execute an instruction of the power supply method provided in embodiments of this application.

It may be understood that structures of the processor 13 and the processor 23 may be the same or may be different.

The memory 101A/101B may include a volatile memory, for example, a random access memory (Random-Access Memory, RAM), or a double data rate synchronous dynamic random access memory (Double Data Rate Synchronous Dynamic Random Access Memory, DDR SDRAM), and may include a non-volatile memory, for example, a hard disk drive (Hard Disk Drive, HDD), a compact disc (Compact Disc, CD), a digital versatile disc (Digital Versatile Disc, DVD), or a solid state disk (Solid-State Drive, SSD). In some embodiments, the memory 101A/101B may be configured to store an instruction and data of the power supply method provided in embodiments of this application.

The interface module 102A/102B includes an interface for connecting the two-in-one computer 1 to another device, for example, a universal serial bus (Universal Serial Bus, USB) interface, a local area network (Local Area Network, LAN) interface, or a high-definition multimedia interface (High Definition Multimedia Interface, HDMI).

The audio module 103A/103B is configured to convert digital audio information into an analog audio signal output, and is also configured to convert an analog audio input into a digital audio signal. The audio module 103A/103B may be further configured to encode and decode an audio signal.

The communication module 104A/104B is configured to provide various modules in the two-in-one computer 1 or the two-in-one computer 1 and another device with a communication solution, including but not limited to a wireless communication solution such as 2G/3G/4G/5G, a wireless communication solution such as a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), NFC, or an infrared (infrared, IR) technology, a wired solution, and the like.

The sensor module 105A/105B may include a voltage sensor, a current sensor, a temperature sensor, a resistance/impedance sensor, and the like, and is configured to detect a battery level and a voltage of a battery in the two-in-one computer 1, a charging power of a power adapter connected to the two-in-one computer 1, and the like.

The display 106 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like.

Particularly, in some embodiments, the display 106 may alternatively be a touchscreen.

The power supply system PS may include a power interface 15, a charging unit 12, and a battery 11 that are disposed on the side of the tablet computer 10, and include a power interface 25, a charging unit 22, and a battery 21 that are disposed on the side of the keyboard device 20, and is configured to supply power to a power-consuming module 14 and a power-consuming module 24. It should be noted that the power supply system PS may further include the foregoing switch K1 to switch K8, the straight-through path 16, the straight-through path 26, and the like. For connection manners and functions of the switch K1 to the switch K8, the straight-through path 16, and the straight-through path 26, refer to the foregoing embodiments in FIG. 3A and FIG. 6. Details are not described herein.

Particularly, a part of the power supply system PS disposed on the side of the tablet computer 10 may be electrically connected, by using an electrical connector, to a part disposed on the side of the keyboard device 20, to transmit a power and a signal. The electrical connector may include but is not limited to a spring-loaded pin, a threaded connector, a clamping connector, a latch connector, a push-pull connector, an in-line connector, and the like.

The keyboard 108 is configured to provide an input capability for a user after the tablet computer 10 is electrically connected to the keyboard device 20 by using an electrical connector 107.

It may be understood that a structure of the two-in-one computer 1 shown in FIG. 12 is merely an example. In some other embodiments, the two-in-one computer 1 may use another structure, or may include more or fewer modules, or may combine or split some modules. This is not limited herein.

Embodiments of a mechanism disclosed in this application may be implemented in hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions, to perform functions described in this application and generate output information. The output information may be used in one or more output devices in a known manner. For a purpose of this application, a processing system includes any system having a processor such as a digital signal processor (DSP), a microcontroller, an application-specific integrated circuit (ASIC), or a microprocessor.

The program code may be implemented in a high-level programming language or an object-oriented programming language to communicate with the processing system. The program code can alternatively be implemented in an assembly language or a machine language when needed. Actually, the mechanisms described in this application are not limited to a scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, the machine-readable medium may include any mechanism for storing or transmitting information in a machine (for example, a computer) readable form, including but not limited to a floppy disk, a compact disc, an optical disc, a compact disc read-only memory (CD-ROM), a magneto-optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory configured to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine-readable (for example, computer-readable) form. In the accompanying drawings, some structural or method features may be shown in a particular arrangement and/or order. However, it should be understood that such a particular arrangement and/or order may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving technical issues proposed in this application. **In** addition, to highlight an innovative part of this application, a unit/module that is not closely related to resolving the technical issues proposed in this application is not introduced in the foregoing device embodiments of this application. This does not mean that there are no other units/modules in the foregoing device embodiments.

It should be noted that, in the examples and specification of this patent, relational terms such as first and second are merely used to distinguish one entity or operation from another entity or operation, and do not necessarily require or imply any such actual relationship or order between these entities or operations. Moreover, the terms "include", "comprise", or any other variants thereof are intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element defined by "include a/an" does not exclude another same element existing in the process, the method, the article, or the device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A power supply method, applied to an electronic device, wherein the electronic device comprises a first component, a second component, and a switch module, the first component comprises a first power supply system, and the second component comprises a second power supply system, wherein
the first power supply system comprises a first power interface, a first charging unit, and a first battery, wherein the first power interface is electrically connected to a first input end of the first charging unit, and the first battery is electrically connected to a first battery end of the first charging unit;
the second power supply system comprises a second power interface, a second charging unit, and a second battery, wherein the second power interface is electrically connected to a second input end of the second charging unit, and the second battery is electrically connected to a second battery end of the second charging unit; and
the method comprises:
when it is detected that the first power interface is connected to a power adapter and the second power interface is not connected to a power adapter, setting the first charging unit to a power supply mode, setting the second charging unit to a charging mode, establishing a first path through the first power interface and the second input end by using the switch module, and charging, by the second charging unit, the second battery through the first path by using the power adapter as a power supply.

2. The method according to claim 1, wherein in a case in which a to-be-charged battery of the electronic device is the second battery, the second charging unit charges the second battery through the first path by using the power adapter as a power supply.

3. The method according to claim 1, wherein in a case in which a to-be-charged battery of the electronic device is the first battery and the second battery, a charging priority of the second battery is higher than that of the first battery, and a supply power of the power adapter is less than or equal to a charging power required by the second battery, the second charging unit charges the second battery through the first path by using the power adapter as a power supply.

4. The method according to claim 3, wherein the method further comprises:
in a case in which the to-be-charged battery is the first battery and the second battery, the charging priority of the second battery is higher than that of the first battery, and the supply power of the power adapter is greater than the charging power required by the second battery, setting the first charging unit and the second charging unit to the charging mode, establishing a second path through a first output end of the first charging unit and the second input end by using the switch module, charging, by the second charging unit, the second battery through the first charging unit and the second path at the power required by the second battery, and charging, by the first charging unit, the first battery at a remaining power of the power adapter.

5. The method according to claim 3 or 4, wherein the method further comprises:
in a case in which the to-be-charged battery is the first battery and the second battery, the charging priority of the first battery is higher than that of the second battery, and the supply power of the power adapter is greater than a charging power required by the first battery, setting the first charging unit and the second charging unit to the charging mode, establishing a third path through the first output end of the first charging unit and the second input end by using the switch module, and charging, by the first charging unit, the first battery at the power required by the second battery, and charging, by the second charging unit, the second battery through the first charging unit and the third path at a remaining power of the power adapter.

6. The method according to claim 2, wherein the method further comprises:
in a case in which the to-be-charged battery is the first battery and the second battery, setting the first charging unit and the second charging unit to the charging mode, establishing a fourth path through the first power interface and the second input end by using the switch module, charging, by the first charging unit, the first battery by using the power adapter as a power supply, and charging, by the second charging unit, the second battery through the fourth path by using the power adapter as a power supply.

7. The method according to claim 6, wherein the charging, by the first charging unit, the first battery by using the power adapter as a power supply, and charging, by the second charging unit, the second battery through the fourth path by using the power adapter as a power supply comprises:
in a case in which a charging priority of the first battery is higher than a priority of the second battery, and a charging power of the power adapter is greater than a power required by the first battery, charging, by the first charging unit, the first battery at the power required by the first battery, and charging, by the second charging unit, the second battery at a remaining power of the power adapter; or
in a case in which a charging priority of the second battery is higher than a priority of the first battery, and a charging power of the power adapter is greater than a power required by the second battery, charging, by the second charging unit, the second battery at the power required by the second battery, and charging, by the first charging unit, the first battery at a remaining power of the power adapter.

8. The method according to claim 1, wherein the first component further comprises a first power-consuming module, and the second component further comprises a second power-consuming module, wherein the first power-consuming module is electrically connected to a first output end of the first charging unit, and the second power-consuming module is electrically connected to a second output end of the second charging unit; and
the method further comprises:
when it is detected that neither the first power interface nor the second power interface is connected to a power adapter, if a remaining battery level of the first battery minus a remaining battery level of the second battery is greater than a first preset battery level, setting the first charging unit and the second charging unit to the power supply mode, establishing a fifth path through the first output end and the second input end by using the switch module, supplying power to the first power-consuming module by using the first battery, and supplying power to the second power-consuming module through the fifth path by using the first battery.

9. The method according to claim 8, wherein the method further comprises:
during supplying power to the first power-consuming module by using the first battery and supplying power to the second power-consuming module through the fifth path by using the first battery, in a case in which a supply power of the first battery is incapable of satisfying a power required by the first power-consuming module and/or the second power-consuming module, disconnecting the fifth path by using the switch module and establishing a sixth path through the first output end and the second output end, and supplying power to the first power-consuming module and the second power-consuming module by using the first battery and the second battery together.

10. The method according to claim 1, wherein the first component is a tablet computer or a keyboard device, and the second component is a keyboard device or a tablet computer.

11. A power supply system, applied to an electronic device, wherein the electronic device comprises a first component and a second component, the power supply system comprises a first power supply subsystem and a second power supply subsystem, the first power supply subsystem is disposed in the first component, and the second power supply subsystem is disposed in the second component, wherein
the first power supply subsystem comprises a first power interface, a first charging unit, a first battery, a first switch, a second switch, a third switch, a fourth switch, and a fifth switch, wherein the first power interface is electrically connected to a first input end of the first charging unit, the first battery is electrically connected to a first battery end of the first charging unit, one end of each of the first switch, the second switch, and the third switch is electrically connected to the first input end, the other end of the first switch is electrically connected to one end of the fourth switch, the other end of the second switch is electrically connected to one end of the fifth switch, the other end of the third switch is electrically connected to a first output end of the first charging unit, and the other end of the fourth switch and the other end of the fifth switch are electrically connected to the first output end;
the second power supply subsystem comprises a second power interface, a second charging unit, a second battery, and a sixth switch, wherein the second power interface is electrically connected to a second input end of the second charging unit, the second battery is electrically connected to a second battery end of the second charging unit, one end of the sixth switch is electrically connected to the second input end, the other end of the sixth switch is electrically connected to a second output end of the second charging unit, the second input end is electrically connected to the one end of the fourth switch, and the second output end is electrically connected to the one end of the fifth switch; and
the power supply system is configured to:
form a seventh path when a to-be-charged battery is the second battery, the first power interface is connected to a power adapter, and the second power interface is not connected to a power adapter, wherein
the seventh path is configured to charge the second battery, and the seventh path is a path that is formed in a case in which the first charging unit is in a power supply mode, the second charging unit is in a charging mode, the third switch and the fourth switch are turned on, and the first switch, the second switch, the fifth switch, and the sixth switch are turned off and that sequentially passes through the power adapter, the first power interface, the third switch, the fourth switch, the second charging unit, and the second battery.

12. The power supply system according to claim 11, wherein the power supply system is further configured to:
form an eighth path when the to-be-charged battery is the first battery and the second battery, the first power interface is connected to a power adapter, and the second power interface is not connected to a power adapter, wherein
the eighth path is configured to charge the second battery, and the eighth path is a path that is formed in a case in which the first charging unit and the second charging unit are in the charging mode, the fourth switch is turned on, and the first switch, the second switch, the third switch, the fifth switch, and the sixth switch are turned off and that sequentially passes through the power adapter, the first power interface, the first charging unit, the fourth switch, the second charging unit, and the second battery.

13. The power supply system according to claim 11, wherein the power supply system is further configured to:
form a ninth path when the to-be-charged battery is the first battery and the second battery, the first power interface is connected to a power adapter, and the second power interface is not connected to a power adapter, wherein
the ninth path is configured to charge the second battery, and the ninth path is a path that is formed in a case in which the first charging unit and the second charging unit are in the charging mode, the first switch is turned on, and the second switch, the third switch, the fourth switch, the fifth switch, and the sixth switch are turned off and that sequentially passes through the power adapter, the first power interface, the first switch, the second charging unit, and the second battery.

14. The power supply system according to claim 11, wherein the first component and the second component are connected by using at least a first electrical connector and a second electrical connector, the second input end is electrically connected to the one end of the fourth switch by using the first electrical connector, and the second output end is electrically connected to the one end of the fifth switch by using the second electrical connector.

15. A power supply system, applied to an electronic device, wherein the electronic device comprises a first component and a second component, the power supply system comprises a first power supply subsystem and a second power supply subsystem, the first power supply subsystem is disposed in the first component, and the second power supply subsystem is disposed in the second component, wherein
the first power supply subsystem comprises a first power interface, a first charging unit, a first battery, a seventh switch, an eighth switch, and a ninth switch, wherein the first power interface is electrically connected to a first input end of the first charging unit, the first battery is electrically connected to a first battery end of the first charging unit, one end of each of the seventh switch and the ninth switch is electrically connected to the first input end, the other end of the seventh switch is electrically connected to one end of the eighth switch, and the other end of the eighth switch and the other end of the ninth switch are electrically connected to a first output end of the first charging unit;
the second power supply subsystem comprises a second power interface, a second charging unit, a second battery, a tenth switch, an eleventh switch, and a twelfth switch, wherein the second power interface is electrically connected to a second input end of the second charging unit, the second battery is electrically connected to a second battery end of the second charging unit, one end of each of the tenth switch and the twelfth switch is electrically connected to the second input end, the other end of the tenth switch is electrically connected to one end of the eleventh switch, the other end of the eleventh switch and the other end of the twelfth switch are electrically connected to a second output end of the second charging unit, and the other end of the tenth switch is further electrically connected to one end that is of the seventh switch and that is electrically connected to the eighth switch; and
the power supply system is configured to:
form a tenth path when a to-be-charged battery is the second battery, the first power interface is connected to a power adapter, and the second power interface is not connected to a power adapter, wherein
the tenth path is configured to charge the second battery, and the tenth path is a path that is formed in a case in which the first charging unit is in a power supply mode, the second charging unit is in a charging mode, the eighth switch, the ninth switch, and the tenth switch are turned on, and the seventh switch, the eleventh switch, and the twelfth switch are turned off and that sequentially passes through the power adapter, the first power interface, the eighth switch, the ninth switch, the tenth switch, the second charging unit, and the second battery.

16. The power supply system according to claim 15, wherein the power supply system is further configured to:
form an eleventh path when the to-be-charged battery is the first battery and the second battery, the first power interface is connected to a power adapter, and the second power interface is not connected to a power adapter, wherein
the eleventh path is configured to charge the second battery, and the eleventh path is a path that is formed in a case in which the first charging unit and the second charging unit are in the charging mode, the ninth switch and the tenth switch are turned on, and the seventh switch, the eighth switch, the eleventh switch, and the twelfth switch are turned off and that sequentially passes through the power adapter, the first power interface, the first charging unit, the ninth switch, the tenth switch, the second charging unit, and the second battery.

17. The power supply system according to claim 15, wherein the power supply system is further configured to:
form a twelfth path when the to-be-charged battery is the first battery and the second battery, the first power interface is connected to a power adapter, and the second power interface is not connected to a power adapter, wherein
the twelfth path is configured to charge the second battery, and the twelfth path is a path that is formed in a case in which the first charging unit and the second charging unit are in the charging mode, the seventh switch and the tenth switch are turned on, and the eighth switch, the ninth switch, the eleventh switch, and the twelfth switch are turned off and that sequentially passes through the power adapter, the first power interface, the seventh switch, the tenth switch, the second charging unit, and the second battery.

18. The power supply system according to claim 15, wherein the first component and the second component are connected by using at least a third electrical connector, and the other end of the tenth switch is electrically connected, by using the third electrical connector, to the one end that is of the seventh switch and that is electrically connected to the eighth switch.

19. An electronic device, wherein the electronic device comprises:
a first component, wherein the first component comprises a first battery;
a second component, wherein the second component comprises a second battery;
a memory, wherein the memory stores instructions; and
at least one processor, configured to execute the instructions, so that the electronic device charges the first battery and/or the second battery or supplies power to the first component and/or the second component by using the power supply method according to any one of claims 1 to 10.

20. A computer-readable storage medium, wherein the storage medium comprises instructions, and when the instructions are executed on an electronic device, the electronic device is enabled to implement the power supply method according to any one of claims 1 to 10.
